# EUROPÄISCHE PATENTSCHRIFT

(11) **EP 1 598 609 B1**
(45) Veröffentlichungstag und Bekanntmachung des Hinweises auf die Patenterteilung: **11.09.2013**
(21) Anmeldenummer: 05090147.9
(22) Anmeldetag: 23.05.2005
(51) Int. Cl.: F24J 3/00, A43B 7/02, B68C 1/02, B62J 1/26, B62K 21/14, A41D 19/015, B62J 33/00

(54) **Einrichtung zur Umwandlung von Bewegungsenergie in Wärme**
Apparatus converting kinetic energy into heat
Dispositif de conversion de l'énergie cinétique en chaleur

(30) Priorität: 21.05.2004 DE 102004025987; 15.10.2004 DE 102004050837; 21.05.2004 DE 202004014225 U; 15.10.2004 DE 202004016185 U
(43) Veröffentlichungstag der Anmeldung: 23.11.2005
(73) Patentinhaber: Dehn, Michael C., 22761 Hamburg (DE)
(72) Erfinder: Dehn, Michael C., 22761 Hamburg (DE)
(74) Vertreter: Kossak, Sabine

(56) Entgegenhaltungen:
- EP-A- 1 321 429
- WO-A-2004/098337
- DE-A1- 1 485 802
- DE-U1-202004 016 185
- FR-A- 1 250 059
- FR-A- 2 157 271
- US-A- 4 756 095
- US-A- 4 941 271
- US-A- 5 619 809
- US-A- 6 055 670
- US-A1- 2002 050 074
- DATABASE EPODOC [Online] EUROPEAN PATENT OFFICE, THE HAGUE, NL; ZHANG MENJIE: "saddle cover with electric heating device for bicycle" XP002345011 -& CN 2 598 832 Y (ZHANG MENGJIE) 14. Januar 2004 (2004-01-14)

## Beschreibung

Die Erfindung betrifft eine Einrichtung zur Umwandlung von Bewegungsenergie in Wärme. Unter Bewegungsenergie wird hierbei insbesondere durch Bewegung des Menschen wie Laufen, Fahrrad fahren, Reiten etc. entstehende Energie verstanden. Die Einrichtung soll beispielsweise geeignet sein für einen Sohlenaufbau für Schuhe, mit dem innerhalb eines Schuhs beim Laufen Wärme erzeugt wird.

Die Möglichkeiten für die Erwärmung von Flächen, zum Beispiel bei konventionellem Schuhwerk, liegen im wesentlichen in der Verwendung von elektrischen Heizelementen, welche zumeist mittels einer Batterie Wärme erzeugen. Die üblichen Heizelemente lassen sich in Form einer Einlegesohle in jeden bestehenden Schuh integrieren, sie sind über ein Kabel mit einer Batterie oder einem Akkumulator verbunden, welche am Körper getragen werden. Diese Systeme gewährleisten je nach eingestellter Leistung einen Betrieb von ca. 1-6 Stunden. Nach diesem Nutzungszeitraum müssen die Batterien/ Akkus gewechselt bzw. aufgeladen werden. Eine andere Form der elektrischen Heizelemente bezweckt eine schnellere Trocknung des Schuhinnenraumes, wodurch u.a. eine Bakterienbildung vermindert werden soll. Systeme dieser Art beziehen ihre Energie aus der Steckdose oder dem Zigarettenanzünder eines Kraftfahrzeuges. Heizelemente dieser Lösungen sind zumeist als Einlegesohlen ausgeformt. Eine weitere Lösung besteht in dem Aufstecken des Schuhs auf einen elektrisch erwärmten Schuhspanner.

Eine andere Möglichkeit ist die Erzeugung von Wärme mittels eines chemischen Prozesses. Dabei kann beispielsweise Natriumacetat (CH₃COONa) als unterkühlte Schmelze vorliegen. Beim Kristallisieren gibt das Natriumacetat Schmelzwärme, hier Kristallisationswärme, ab. Diese so genannten Wärmekissen, die auch als Handwärmer bekannt sind, können für die Erwärmung von Schuhwerk nutzbar gemacht werden. Eine zusätzlich denkbare Möglichkeit ist die Erzeugung von Wärme mittels eines Kohlestabs, welcher durch Verglühen Wärme erzeugt.

Die Techniken für die Polsterung von Schuhen liegen im Wesentlichen in der Verwendung von verschiedenen Polymerschäumen oder elastischen Kunstoffen, welche sich in nur geringem Umfang zusammenpressen lassen und über eine geringe Energieabgabe ein Rückfedern der Energie erreichen. Die üblichen Schaummaterialien sind zum Teil elastisch zusammendrückbar und zwar auf Grund dessen, dass im Schaum offene oder geschlossene Zellen eingeschlossen sind.

Bekanntes Schuhwerk besitzt zum Beispiel eine nachgiebig kompressible Mittelsohle, welche oberhalb einer im Wesentlichen flexiblen, abriebfesten Außensohle angeordnet ist. Solche Zwischensohlen werden z.B. aus konventionellen Schaummaterialien, wie aus Ethylenvinylacetat (EVA) oder aus Polyurethan hergestellt. Die Außensohlen sind aus konventionellen, abriebfesten Materialien, wie beispielsweise einem Gummiverbund hergestellt.

Hohlräume werden seit langem in Schuhen als Polster verwendet, um die Bequemlichkeit der Schuhe zu erhöhen, den Halt des Fußes zu verstärken, die Gefahr von Verletzungen und anderen schädlichen Einwirkungen zu reduzieren und eine schnelle Ermüdung der Füße herabzusetzen. Im Allgemeinen bestehen die Hohlräume aus elastomeren Materialien, die derart geformt sind, dass sie wenigstens eine unter Druck stehende Tasche oder Kammer definieren. Typischerweise definiert ein Hohlraum tatsächlich viele Kammern, die in einem Muster angeordnet sind, das derart aufgebaut ist, dass eine oder mehrere der oben erwähnten Aufgaben gelöst werden.

Die Kammern können mit einer Anzahl verschiedener Medien, wie Luft, verschiedene Gase, Wasser oder anderen Flüssigkeiten, unter Druck gesetzt werden.

Diese vorgenannten Lösungen der Wärmeerzeugung weisen jedoch Nachteile in der Form auf, dass die Wärmeerzeugung ausschließlich auf externe Energiequellen angewiesen ist, sie ein hohes Eigengewicht haben und kostenintensiv bzw. relativ aufwendig herstellbar sind, zudem geben sie die Wärme nur an die Fußsohle ab. Daneben bieten sie kaum Trage-Benutzerkomfort, da sie auf Batterien/Akkus angewiesen sind, welche am Körper getragen werden müssen. Auch erzeugen sie nur für wenige Stunden Wärme. Wärmekissen erzeugen, nachdem der chemische Prozesses aktiviert wurde, ebenfalls nur für kurze Zeit Wärme und müssen dann gegen neue ausgetauscht werden.

Die für die Polsterung zumeist verwendeten Schaummaterialien, z.B. Ethylenvinylacetat (EVA) oder Polyurethan, können einen Aufprall zwar resorbieren, aber diese Energie nur träge oder zu einem geringen Maß als Abstoßenergie wieder abgeben. Des Weiteren haben diese Materialien den Nachteil, dass durch häufiges Zusammenpressen die Elastizität nachlässt und sie so mehr oder weniger dauerhaft abflachen. Ein Aufbau aus verschiedenen Schichten, welche aus Schaummaterialien oder Gummi bestehen, hat ebenfalls den Nachteil, dass diese den Aufprall nur gering resorbieren und die Energie nur träge oder nur in einem geringen Maß als Abstoßenergie wieder abgeben. Hohlräume aus elastomeren Materialien, welche mit Luft, verschiedenen Gasen, Wasser oder anderen Flüssigkeiten unter Druck gesetzt wurden, haben den Nachteil, dass sie ebenfalls abflachen und "auf Grund gehen" können, wenn sie hohen Belastungsdrücken unterliegen, wie beispielsweise bei sportlichen Aktivitäten. Weiterhin lassen sie nur dicke Sohlenaufbauten zu, was mit eingeschränkten Designmöglichkeiten einhergeht.

Bei diesen Möglichkeiten der Schuherwärmung wird im Allgemeinen das Beseitigen von Feuchtigkeit und Geruch, die als Resultat der Feuchtigkeit auftreten und welche sich in dem Schuh aufgrund des Fußschweißes ansammeln, der wiederum durch eine schlechte Schuhbelüftung erzeugt wird, nur unzureichend oder durch eine aufwendige Mechanik ermöglicht. Die bislang bekannten belüfteten Schuhe enthalten Elastomere und flexible luftundurchlässige Kissen, welche aus weichen Materialien, wie z.B. Gummi hergestellt sind und eine Vielzahl von Löchern im Sohlenbereich aufweisen, die ein Nach-Aussendringen von Dampf ermöglichen. Sie weisen u.a. den Nachteil auf, dass sie nur passiv, das heisst nur unzureichend durch die Krafteinwirkungen, die beim Gehen oder Laufen entstehen, einen Luftaustausch unterstützen. Zudem weisen gerade Durchtrittsöffnungen im Sohlenbereich den Nachteil auf, dass sie durch Schmutz schnell verschlossen werden und zudem die erzeugte Wärme schnell entweichen kann.

Eine vergleichbare heizbare Schuheinlage ist aus der DE 1 485 802 A1 bekannt. Die Schuheinlage weist zwei äußere feststehende Schichten auf, zwischen denen eine Bewegungsfolie gelagert ist. Beim Gehen werden bei der Belastung die beiden feststehenden Schichten aufeinander zugedrückt, wodurch die Bewegungsfolie eine Ausweich- bzw. Relativbewegung ausführt und so Reibungswärme erzeugt. Die Folie ist relativ nachgiebig und kann sich bei längerer Beanspruchung so verändern, dass keine ausreichende Polsterung mehr möglich ist. Durch Anordnung einer durchgehenden Folie über den gesamten Sohlenbereich ist zudem ebenfalls ein Luftaustausch nur schwierig möglich.

Eine weitere Heizeinrichtung für eine Schuhsohle ist aus der FR 1 250 059 A bekannt. Bei dieser Vorrichtung wird ein mehrfach gebogenes Stahl- oder Eisenblatt beim Gehen gegeneinander gedrückt, wodurch durch die Reibung der Metalloberflächen Wärme entsteht. Die Konstruktion des Bauteils aus Metall führt jedoch zu einem vergleichsweise hohen Gewicht und zu einer geringen Elastizität der Einlage.

Der Erfindung liegt die Aufgabe zu Grunde, eine Einrichtung zur Umwandlung von Bewegungsenergie in Wärme zu schaffen, welche die bei Bewegungen entstehende kinetische Energie für die Erzeugung von Wärme nutzen sowie eine Umverteilung von Wärme ermöglichen. Bei einer Anwendung als Sohlenaufbau für Schuhe soll gegebenenfalls die Belüftung des Schuhinneren ermöglicht werden und die Aufprallresorption unterstützt werden. Die Einrichtung soll auf baulich einfache Weise ohne elektronische Bauteile kostengünstig hergestellt werden können.

Die Lösung der Aufgabe erfolgt mit den Merkmalen des Anspruchs 1 Vorteilhafte Ausgestaltungen sind Gegenstand der Unteransprüche.

Diese Einrichtung hat gegenüber vorbekannten Lösungen den Vorteil, dass sich ein selbstregulierender Effekt dadurch ergibt, dass der Reibungswiderstand des Polymer-Kunststoffes sich mit zunehmender Temperatur verringert, so dass die Reibung dann geringer wird und weniger Wärme erzeugt wird. Bei höherer Außentemperatur wird somit weniger Wärme erzeugt als bei geringer Außentemperatur. Der Effekt ist insbesondere dann sehr wirkungsvoll, wenn beide Formteile aus einem Polymer-Kunststoff bestehen.

Weiter ist vorzugsweise vorgesehen, dass die Auswölbungen und die gegenüberliegenden Aussparungen verschiedene Neigungswinkel aufweisen.

Zweckmäßig sind die Auswölbungen und die gegenüberliegenden Aussparungen ringförmig oder streifenförmig angelegt.

Nach einer Variante der Erfindung kann der zwischen dem ersten und zweiten Formteil gebildete Hohlraum mit einem Gas, einem Gel oder einer Flüssigkeit gefüllt sein.

Die Formteile können vorteilhaft mit Latentspeichermaterialien in Verbindung stehen, beispielsweise mikroskopisch kleinen Kunststoffkügelchen, die in ihrem Kern ein Speichermedium aus Wachsen enthalten. Mikroverkapselte Speichermedien dieser Art werden u.a. unter dem Handelsnamen Micronal von der Firma BASF vertrieben. Bei Wärme- oder Kälteeinwirkung schmilzt bzw. erstarrt das Wachs in den Speicherkapseln. Die Energieaufnahme dieser wachsähnlichen Paraffine ist dreimal so hoch, wie die von Wasser. Auf diese Weise regulieren sie die Umgebungstemperatur: produzieren die Formteile Wärme, nehmen Latentwärmespeicher diese auf, fällt sie, z.B. beim Warten auf den Bus, geben sie Wärme ab. Während der Phasenumwandlung bleibt die Temperatur konstant. Diese in der Phasenumwandlung "versteckt" gespeicherte Wärme wird als latente Wärme bezeichnet. Es handelt sich hier um einen reversiblen Vorgang, der sich im Schmelzbereich des Wachses abspielt.

Der Latentwärmespeicher kann mit einem Indikatorfarbstoff versehen sein, um Temperaturveränderungen optisch sichtbar zu machen.

Zweckmäßig können das erste und das zweite Formteil im unbelasteten Zustand mindestens teilweise voneinander beabstandet sein, zum Beispiel durch Distanzstücke.

Sie können auch aus einem Stück hergestellt und mit einem Scharnier verbunden und gegebenenfalls auf der Gegenseite mit einem Verschluss versehen sein.

Alternativ dazu können sie auch miteinander verklebt sein.

Sie können auch aus einem elektroaktiven oder thermoaktiven Polymer bestehen. Bei einem elektroaktiven Polymer lassen sich unterschiedliche Materialeigenschaften durch Anlegen einer elektrischen Spannung einstellen. Thermoaktive Polymer ändern ihre Eigenschaften mit veränderter Temperatur.

Die Formteile können Bestandteile des Aufbaus verschiedener Gebrauchsgegenstände sein, in oder an denen eine Wärmeerzeugung erwünscht ist, zum Beispiel Schuhe, Sättel, Griffe, Einlagen in Handschuhen oder Textilien etc.

Ist die Einrichtung Teil eines Sohlenaufbaus für Schuhe, so wird das erste Formteil als ein oberes, elastisch ausgebildetes Sohlenteil und das zweite Formteil als ein unteres Sohlenteil ausgebildet, wobei die Sohlenteile mindestens im Fersenbereich des Schuhs vorgesehen sind.

In besonders bevorzugter Weise ist vorgesehen, dass sich innerhalb oder unterhalb des unteren Sohlenteils ein sich vom Fersenbereich bis mindestens in einen weiteren Teil des Schuhs erstreckender, mit einer Flüssigkeit gefüllter Schlauch befindet, in dessen ringförmigem Verlauf mindestens eine Einwegdurchtrittsöffnung angeordnet ist. Durch einen Druck auf den Fersenbereich wird die Flüssigkeit, die sich in diesem Bereich erwärmt hat, im Kreislauf in weitere Bereiche des Schuhs befördert und kann dort die Wärme wieder abgeben.

Diese Maßnahme bietet die Möglichkeit, die kinetische Energie in Wärme umzuwandeln und einen Temperaturaustausch, welcher durch kinetische Energie angetrieben wird, zu ermöglichen. Die Schuhe eignen sich deshalb insbesondere für die kälteren Jahreszeiten bzw. für den Gebrauch in kalten Gebieten. Die beim Laufen mindestens im Fersenbereich entstehende Wärme wird in eine Region transportiert, die durch Kälte eher gefährdet ist, z.B. an die Zehen. Der Fuß wird gleichmäßig warm, was ein angenehmes Tragegefühl erzeugt. Die Gefahr von Erfrierungen wird wesentlich verringert.

In weiter bevorzugter Weise ist vorgesehen, dass das obere und das untere Sohlenteil im unbelasteten Zustand mindestens teilweise voneinander beabstandet sind. Damit bildet sich ein Hohlraum zwischen oberem und unterem Sohlenteil. Der Hohlraum kann gegebenenfalls mit einem Gas, einem Gel oder einer Flüssigkeit gefüllt werden. Ist er nicht befüllt, kann durch Lüftungsöffnungen in den Sohlenteilen beim Laufen ein ständiger Luftaustausch nach außen stattfinden. Zusätzlich kann vorgesehen sein, dass die Lüftungsöffnungen mit jeweils mindestens einem Ein- und einem Auslassventil versehen sind.

Die an einer Stelle eingesaugte Luft kann dann bis zum Auslass gezielt durch vorbestimmte Regionen des Sohlenaufbaus geleitet werden.

Nach einem weiteren bevorzugten Merkmal der Erfindung sind das obere und das untere Sohlenteil aus einem Stück hergestellt und mit einem Scharnier verbunden.

Die Reibungswärme wird durch Auswölbungen an einem Sohlenteil und zugehörige Einwölbungen an dem anderen Sohlenteil erzeugt, die bei der Laufbewegung aneinander reiben. Zur Verstärkung dieses Effektes kann die Oberfläche dieser Ein-/Auswölbungen aufgeraut, mit einer entsprechenden Beschichtung versehen sein oder in sich noch einmal strukturiert sein, zum Beispiel durch eine schuppenartige Struktur.

Zur Erhöhung des Tragekomforts kann zusätzlich eine Einlegesohle vorgesehen sein, die dann zweckmäßig ebenfalls mit Lüftungsöffnungen versehen ist. Es kann aber auch vorgesehen sein, dass die Sohlenteile selber als Einlegesohle ausgebildet sind, so dass der Wärme erzeugende Effekt auch für sonstige Schuhe genutzt werden kann.

Die Sohlenteile werden zweckmäßig aus einem thermoplastischen Kunststoff gefertigt. Hierbei kann der Vorteil genutzt werden, dass die Flexibilität des Materials von seiner Temperatur abhängig ist. Ist die Temperatur niedrig, so ist die Flexibilität geringer, wodurch der Reibungswiderstand steigt und schnell Wärme erzeugt wird. Bei steigender Temperatur nimmt dagegen der Reibungswiderstand ab, so dass ein selbstregulierender Effekt bewirkt wird.

Nachfolgend soll die Erfindung anhand von Ausführungsbeispielen noch näher erläutert werden. In den zugehörigen Zeichnungen zeigen
- Figur 1: eine erfindungsgemäße Einrichtung im Querschnitt,
- Figur 2: einen Querschnitt durch einen zugehörigen Latentwärmespeicher,
- Figur 3: einen Querschnitt des Sohlenaufbaus eines nach der Erfindung hergestellten Schuhs,
- Figur 4: eine Draufsicht auf den Sohlenaufbau gemäß Figur 3 im Fersenbereich,
- Figur 5: einen Querschnitt einer weiteren Variante des Sohlenaufbaus eines nach der Erfindung hergestellten Schuhs,
- Figur 6: eine Schnittansicht eines erfindungsgemäßen Sohlenaufbaus, welcher für einen Einsatz im Fersenbereich vorgesehen ist, dessen Ober- und Unterteil noch nicht zusammengeklappt wurden,
- Figur 7: eine Schnittansicht eines Sohlenaufbaus nach Figur 6 nach dem Umklappen,
- Figur 8: eine Draufsicht auf einen Sohlenaufbau, welcher für einen Einsatz im Fersenbereich vorgesehen ist, dessen Ober- und Unterteil durch einen eingesetzten Verbindungsbolzen miteinander verbunden sind,
- Figur 9: eine Schnittansicht einer weiteren Variante eines erfindungsgemäßen Sohlenaufbaus,
- Figur 10: einen Verbindungsbolzen in einer Schnittansicht,
- Figur 11: einen Verbindungsbolzen in einer Draufsicht,
- Figur 12: die Anordnung eines Schlauches und zugehöriger Ventile zum Transport der in der Sohle erzeugten Wärme,
- Figur 13: eine Variante eines Sohlenaufbaus mit Ein- und Auslassventil für die Lüftungsöffnungen,
- Figur 14: eine gemäß der Erfindung gestaltete Einlegesohle,
- Figur 15: die Einlegesohle gemäß Figur 14 in einer Schnittdarstellung,
- Figur 16: eine weitere Variante der erfindungsgemäßen Einrichtung im Querschnitt,
- Figur 17: noch eine Variante der Einrichtung im zusammengedrückten Zustand,
- Figur 18: diese Variante im getrennten Zustand,
- Figur 19: eine als Luftkissen gestaltete Einrichtung in einer Draufsicht,
- Figur 20: das Luftkissen nach Figur 19 in einer Schnittdarstellung,
- Figur 21: eine Variante mit einer anderen Form der Auswölbungen,
- Figur 22: eine weitere Variante mit einer speziellen Form der Auswölbungen im getrennten Zustand der Formteile,
- Figur 23: die Variante nach Figur 21 im zusammengedrückten Zustand der Formteile,
- Figur 24: eine Ausgestaltung der Variante nach Figur 22,
- Figur 25: eine Variante mit einer weiteren speziellen Form der Auswölbungen im getrennten Zustand der Formteile,
- Figur 26: die Variante nach Figur 25 im zusammengedrückten Zustand der Formteile,
- Figur 27: einen Abstandshalter für die Formteile,
- Figur 28: ein Beispiel für die Oberfläche einer Auswölbung in Draufsicht,
- Figur 29: die Oberfläche in Seitenansicht,
- Figur 30: einen Fahrradsattel mit der erfindungsgemäßen Einrichtung in einer Schnittdarstellung als ein Anwendungsbeispiel,
- Figur 31: einen Lenkergriff für ein Fahrrad mit der erfindungsgemäßen Einrichtung im Querschnitt,
- Figur 32: ein Beispiel für eine Einlegesohle mit der Wärme erzeugenden Einrichtung,
- Figur 33: einen Handschuh mit der Einrichtung,

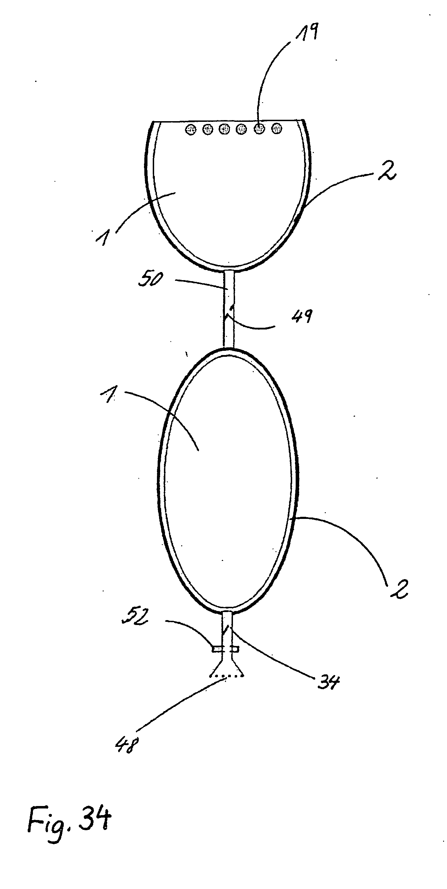

- Figur 34: einen mehrteiligen Aufbau einer Schuhinnensohle mit der Einrichtung und
- Figur 35: die Einrichtung analog zu Figur 1 mit einer zusätzlichen Isolationsschicht.

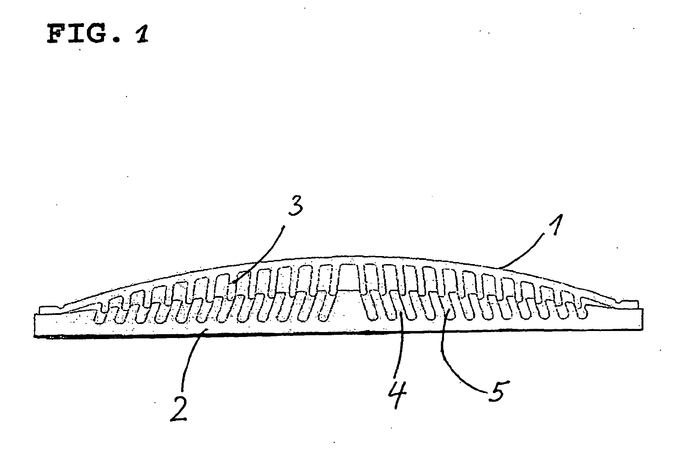

Figur 1 zeigt eine erfindungsgemäße Einrichtung als separates Bauteil in einer Schnittdarstellung. Die Einrichtung besteht aus einem ersten, oberen Formteil 1 und einem zweiten, unteren Formteil 2. Beide Formteile 1 und 2 haben ringförmig verlaufende, rippenartige Auswölbungen 3 bzw. 4, die allerdings in einem unterschiedlichem Neigungswinkel verlaufen. Bei einem Druck auf das erste Formteil 1 schieben sich die Auswölbungen 3 des ersten Formteils 1 in Ausnehmungen 5, die zwischen den Auswölbungen 4 des zweiten, unteren Formteils 2 entstehen. Durch die Schräglage der Auswölbungen 4 gegenüber den Auswölbungen 3 des ersten Formteils 1 gleiten die letzteren gegen den Widerstand der Auswölbungen 4 in die Ausnehmungen 5. Durch die Bewegung entsteht an der Oberfläche der Auswölbungen 3, 4 Reibungswärme, die dann von den Formteilen 1 und 2 weitergeleitet werden kann.

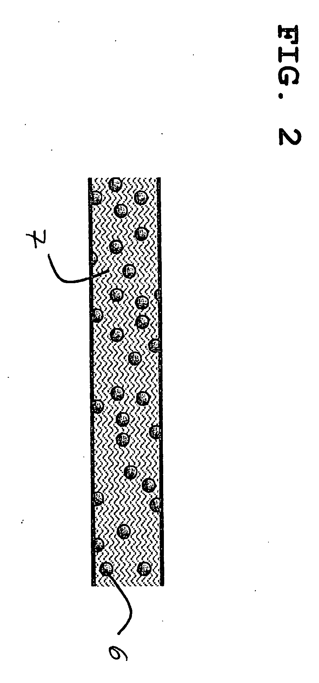

Figur 2 zeigt beispielsweise einen Querschnitt durch einen Latentwärmespeicher, der mit der Einrichtung in Verbindung stehen kann und der die erzeugte Reibungswärme aufnimmt.

Der Latentwärmespeicher enthält mikroskopisch kleine Kunststoffkügelchen 6, die in ihrem Kern ein Speichermedium aus Wachsen enthalten. Bei Wärme- oder Kälteeinwirkung schmilzt bzw. erstarrt das Wachs in den Kunststoffkügelchen 6. Erzeugt die Einrichtung Wärme, nimmt der Latentwärmespeicher diese auf, fällt sie, gibt er Wärme ab. Während der Phasenumwandlung bleibt die Temperatur konstant. Die Kunststoffkügelchen 6 sind in einer Trägersubstanz 7 gebunden sein, zum Beispiel in einem Acrylat.

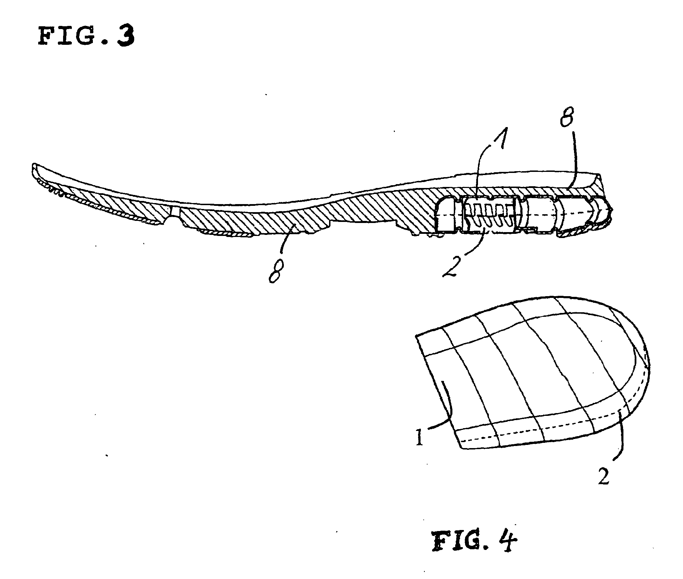

Figur 3 zeigt als Anwendungsgebiet der Erfindung einen Sohlenaufbau für einen Schuh in einer Schnittdarstellung. Die Wärme erzeugende Einrichtung ist in den Fersenbereich einer Mittelsohle 8 integriert. Figur 4 zeigt den Ferseneinsatz in einer Draufsicht. Die Rippen verlaufen auch hier ringförmig. Versuche haben ergeben, dass sich dieser Wärmeerzeuger bei einer Laufbewegung um bis zu 7° erwärmt.

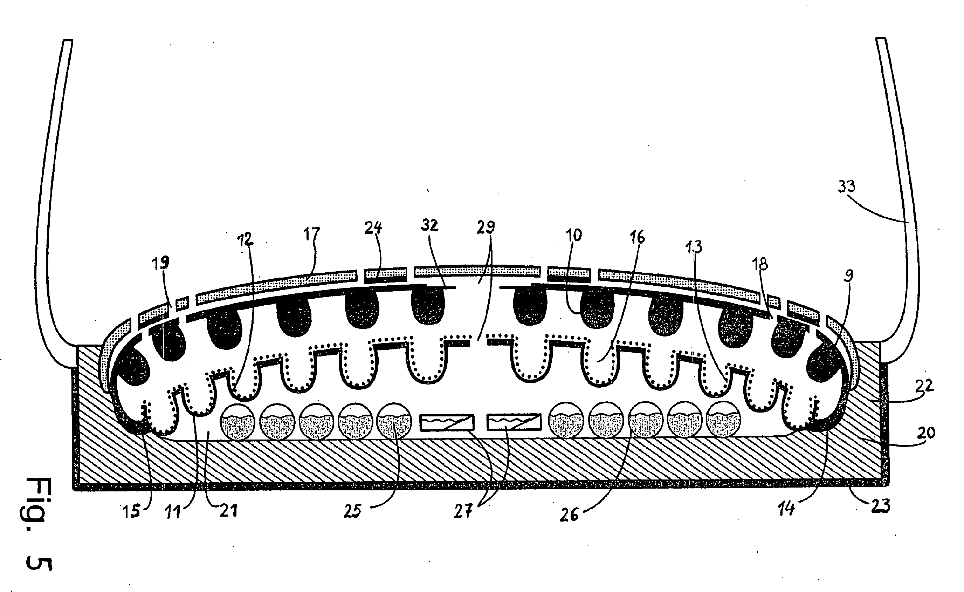

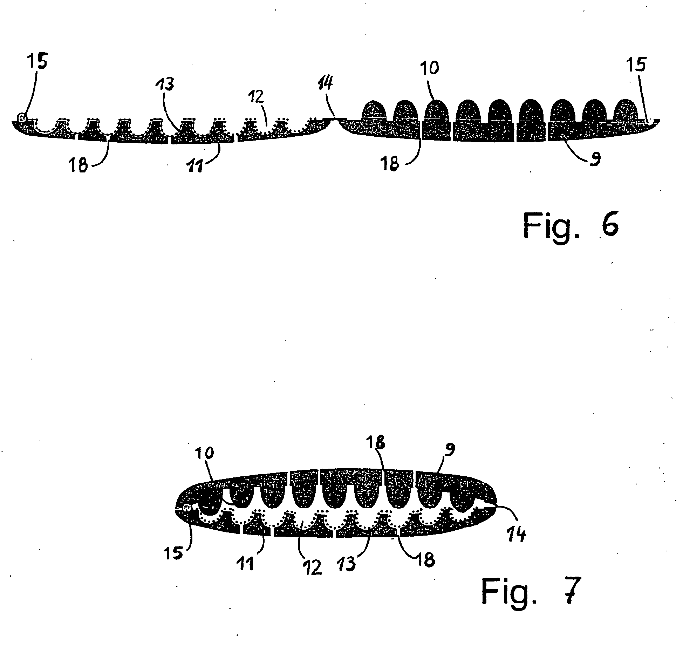

Figur 5 zeigt einen weiteren Sohlenaufbau in einer Schnittdarstellung. Ein Oberteil 9 der Sohle verfügt über nach unten ragende kompakte, aber dennoch flexible Auswölbungen 10. Das Material eines Unterteils 11 der Sohle verfügt über nach innen ragende Einwölbungen 12, welche in einem Neigungswinkel gegenüber den Auswölbungen 10 angeordnet sind. Das Unterteil 11 sowie die Einwölbungen 12 haben eine raue Oberfläche 13. Diese Textur kann durch eine Materialauflage wie z.B. eine filzartige Schicht oder durch eine Oberflächenstrukturierung erzielt werden. Das Unterteil 11 und das Oberteil 9 sind seitlich durch ein Scharnier 14 miteinander verbunden, wie besser aus Figur 6 zu ersehen ist. Durch Zusammenklappen des Oberteils 9 und des Unterteils 11 werden diese übereinander liegend angeordnet und durch einen Verschluss 15 miteinander verbunden. Durch die wie den Figuren 6 und 7 gezeigte gewölbte Form entsteht, nachdem Oberteil 9 und Unterteil 11 zusammengeklappt wurden, ein Hohlraum 16. Um den Tragekomfort zu erhöhen, wurde eine anatomisch geformte Einlegesohle 17 über dem Sohlenaufbau angebracht.

Werden Oberteil 9 und Unterteil 11, zum Beispiel durch das Auftreten mit der Ferse, zusammengepresst, schieben sich die Auswölbungen 10 in die in einem schrägen Winkel angeordneten Einwölbungen 12 hinein. Durch die Schräglage der Einwölbungen 12 gegenüber den Auswölbungen 10 können die gering flexiblen Auswölbungen 10 nur durch einen Anpressdruck gegen den Widerstand der rauen Oberfläche 13 und durch Verbiegen der Auswölbungen 10 in die Einwölbungen 12 hineingleiten. Die Kombination von Anpressdruck und Bewegung (Hineingleiten gegen den Widerstand der rauen Oberfläche 13) entsteht an der glatten Oberfläche der Auswölbungen 10 Reibungswärme.

Die Auswölbungen 10 können auch so angeordnet sein, dass sie sich nach Art eines Kolbens ständig in Einwölbungen 12 befinden und sich in diesen auf- und abbewegen.

Durch den Anpressdruck bzw. beim Auftreten mit einem Fuß wird der nach oben gewölbte Sohlenaufbau durch die Flexibilität des Materials infolge Verformen des gesamten Sohlenaufbaus nach unten gepresst. Durch das Zusammenpressen entweicht die in dem Hohlraum 16 befindliche Luft durch Lüftungsöffnungen 18, welche sich sowohl im Oberteil 9 als auch Unterteil 11 befinden, sowie durch Lüftungslöcher 19, welche sich in der Einlegesohle 17 befinden.

Durch Zurücknehmen der Kraft, z.B. beim Heben des Fußes, springt der Sohlenaufbau durch seine Materialeigenschaften, durch Abstandshalter oder eingeschlossene Luft sowie seine Form in seine ursprüngliche Position zurück. Durch die Zugkraft des Oberteils 9 und des Unterteils 11 ziehen sich die Auswölbungen 10 gegen den Widerstand der rauen Oberfläche 13 und gegen den schrägen Austrittswinkel aus den Einwölbungen 12 heraus. Durch die Zugkraft entstehen an den Oberflächen der Auswölbungen 10 und der Einwölbungen 12 Reibungswärme. Der Hohlraum 16 vergrößert sich, Luft wird durch die Lüftungsöffnungen 18 sowie durch die Lüftungslöcher 19 der Einlegesohle 17 angesogen.

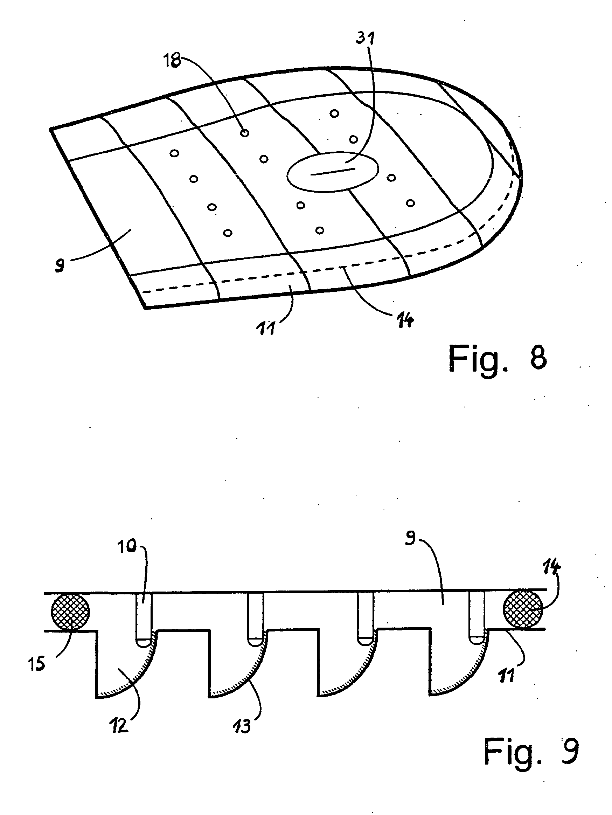

Figur 9 zeigt eine zweite Variante für die Gestaltung der Auswölbungen 10, die hier in einer stiftartigen Form vorliegen, sowie ihr Zusammenwirken mit den Einwölbungen 12, hier mit Flächen, an denen die stiftartigen Auswölbungen 10 beim Auftreten herabgleiten.

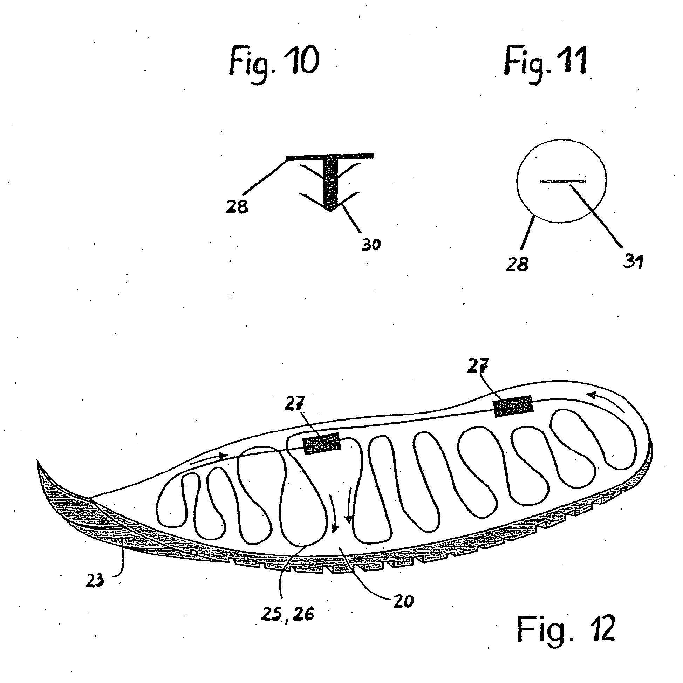

Um den Sohlenaufbau in eine Mittelsohle 20 einpassen zu können, wurde in dieser eine Aussparung 21 ausgebildet, indem der Sohlenaufbau auf Auflagekanten 22, welche aus dem Material der Mittelsohle 20 bestehen, aufliegt Der sich darunter befindende Raum bietet ausreichenden Platz für ein Nach-Unten-Pressen des Sohlenaufbaus, wenn dieser, z. B durch die Krafteinwirkung, wie sie beim Gehen entsteht, nach unten gedrückt wird. Auf die Unterseite der Mittelsohle 20 wird eine Außensohle 23 aufgebracht, welche aus konventionellen abriebfesten Materialien besteht, wie z.B. aus einem Gummiverbund. An der Unterseite der Einlegesohle 17 befinden sich Abstandshalter 24, die ein dauerhaftes Verschließen der Lüftungsöffnungen 18 verhindern. Gleichzeitig fangen das Oberteil 9, das Unterteil 11 und die Ineinander-Bewegung der Auswölbungen 10 gegen den Widerstand der rauen Oberflächen 13 und die schrägen Eintrittswinkel der Einwölbungen 12 einen Großteil der Kraft, wie sie z.B. beim Gehen auf den Sohlenaufbau einwirkt, ab. (Bei einer Befüllung des Hohlraums zwischen Oberteil 9 und Unterteil 11 auch durch ein eingeschlossenen Gas oder eingeschlossene Flüssigkeit). Ein Teil der kinetischen Energie wird in Reibungswärme umgewandelt. Den Teil der Kraft, den der Sohlenaufbau nicht abfangen kann, wird von dem nachgiebigen, kompressiblen Material eines mit einer Flüssigkeit 25 gefüllten zick-zackförmig angeordneten Schlauches 26 und dem nachgiebigen, kompressiblen Material der Mittelsohle 20 sowie der Außensohle 23 aufgenommen. Durch das Zusammenpressen des Schlauches 26 wird die darin befindliche Flüssigkeit 25 durch zwei Einwegdurchtrittsöffnungen 27 in den ebenfalls zick-zackförmig angeordneten Teil des Schlauches 26, welcher sich im Vorderfussbereich befindet, gepresst. Figur 12 zeigt den Verlauf des in das Unterteil 11 eingebetteten Schlauches 26. Durch Zurücknahme der Krafteinwirkung bzw. beim Heben oder Abrollen des Fußes ziehen sich die Auswölbungen 10 aus den Einwölbungen 12 unter Entstehung von Reibungswärme heraus, Oberteil 9 und Unterteil 11 springen durch ihre elastischen Materialeigenschaften in ihre Anfangsposition zurück, gleichzeitig wird z.B. der Fuß abgestoßen. Der Hohlraum 16, welcher sich zwischen Oberteil 9 und Unterteil 11 befindet, vergrößert sich. Durch die Sogwirkung strömt Luft durch die Lüftungsöffnungen 18 sowie durch die Lüftungslöcher 19 der Einlegesohle 17. Luft wird aus dem Schuhinneren in den Hohlraum 16 eingesogen. Der Schlauch 26 zieht sich auf Grund seiner Flexibilität in seine ursprüngliche Form zurück. Es entsteht eine Sogwirkung. Die zuvor in den Vorderfußbereich gepresste Flüssigkeit 25 wird durch die Sogwirkung des Materials des Schlauches 26 als auch durch die Gewichtsverlagerung auf den Vorderfußbereich in den Fersenbereich zurückgepresst, da der Teil des Schlauches 26 im Vorderfußbereich als auch der Teil des Schlauches 26 im Fersenbereich an seinen jeweiligen Enden mit Einwegsdurchtrittsöffnungen 27 versehen ist, welche jeweils nur einen Durchfluss der Flüssigkeit 26 in die gleiche Richtung zulassen. Die Flüssigkeit 25 fließt, angetrieben durch die z.B. beim Laufen entstehende kinetische Energie, in eine Richtung, vergleichbar mit einem Blutkreislauf. Mit der zirkulierenden Flüssigkeit 25 wird die erzeugte Wärme an beliebige Stellen des Schuhs weitergeleitet. So ist es jetzt z.B. möglich Wärme an den Spann, die Zehen oder in einen Stiefelschaft weiterzuleiten. Ein Platzen des Schlauches 26 wird durch in dem Kreislauf eingeschlossene Luftblasen verhindert, welche bei einem sehr starken, über die gesamte Fußfläche wirkenden Druck komprimiert werden und so ein Platzen des Schlauches 26 oder der Einwegdurchtrittsöffnungen 27 verhindern.

Der Schlauch 26 kann mittels Schmelzklebstoffpunkten auf der Mittelsohle 20 befestigt sein. Möglich ist es auch, dass aus dem Material von Oberteil 9 und/oder Unterteil 11 Haltevorrichtungen für den Schlauch 26 herausgebildet sind. Ein Anordnung ohne die Notwendigkeit des Haltens des Schlauches 26 entsteht, wenn der Schlauch 26 durch teilweises Verkleben oder Verschweißen des Oberteils 9 und des Unterteils 11 unter Belassen des ringförmigen Schlauchverlaufes verbunden werden.

Um Schuhe mit dem erfindungsgemäßen Sohlenaufbau auch bei wärmeren Temperaturen nutzen zu können oder Abnutzungen zu ersetzen, ist es möglich, ihn aus der Aussparung 21 zu entfernen und gegen ein neuen Sohlenaufbau auszutauschen oder gegen einen, der über veränderte Eigenschaften verfügt, wie z.B. geringere Wärmeentwicklung und/ oder eine intensivere Belüftung. Eine Möglichkeit, mit der die Wärmeerzeugung gemindert werden kann, besteht in dem Einbringen eines Verbindungsbolzens 28, und zwar durch Einstecken in Öffnungen 29, welche sich in dem Oberteil 9 sowie in dem Unterteil 11 befinden. Der Verbindungsbolzen 28 weist Widerhaken 30 auf, mit denen sich das Oberteil 9 und das Unterteil 11 miteinander verbinden lassen. Je nach Ausführung des Verbindungsbolzens 28 wird der Bewegungsradius reduziert und somit die Wärmeentwicklung gemindert oder ganz unterbunden. An der Oberseite des Verbindungsbolzens 28 befindet sich eine Einkerbung 31, mit der sich der Verbindungsbolzen 28, z.B. mit einer Münze, drehen lässt. Sind die Öffnungen 29 schlitzförmig gestaltet, greifen die Widerhaken 30 durch Drehen des Verbindungsbolzens 28 ins Leere und er kann durch einfaches Herausziehen entfernt werden. Damit der eingesteckte Verbindungsbolzen 28 nicht aufträgt, ist das Oberteil 9 an der Stelle der Öffnungen 29 mit einer Materialaussparung 32 versehen.

Das Schuhoberteil 33, welches mit der Mittelsohle 20 und ggf. mit dem Sohlenaufbau fest verbunden ist, besteht aus den für diese Anwendung typischen Materialien, wie z.B. Leder oder textilem Gewebe.

Je nach Einsatzbereich des Schuhes kann die Materialstärke des Sohlenaufbaus sowie des Schlauches 26 und der Einwegdurchtrittsöffnungen 27 unterschiedlich sein. Beispielsweise ist es für den Tragekomfort eines Freizeitschuhs wünschenswert, dass die wärmerzeugenden Eigenschaften bei normalem Gehen eine maximale Wirkung erreichen. Dies wird durch eine dünnere bzw. elastischere Materialwahl erreicht. Dagegen ist es bei Sportschuhen wünschenswert, dass eher ein Maximum der Wärmeumverteilung, so wie eine Wärmerzeugung bei einer sportlichen Betätigung wie z.B. beim Joggen, Sprinten und nicht nur bzw. schon beim normalen Gehen erreicht wird. Dies wird durch ein Material erreicht, aus dem der Sohlenaufbau und der Schlauch 26 sowie die Einwegdurchtrittsöffnungen 27 bestehen, welches erst bei extremen Belastungen, wie beispielsweise beim Aufsetzen des Fußes nach einem Sprung, ein Maximum der Reibungswärme und der Wärmeumverteilung erreicht.

Der Sohlenaufbau wird zweckmäßig im Spritzgussverfahren aus einem Teil herausgebildet, welches z.B. aus einem stabilen nachgiebigen Kunststoff, wie z.B. Nylon oder PET, besteht.

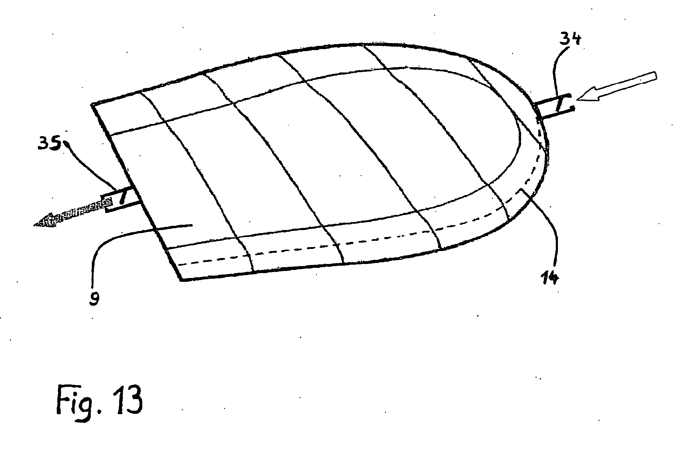

In einer weiteren Ausgestaltung der Erfindung gemäß Figur 13 befinden sich in dem Sohlenaufbau mindestens jeweils ein Ein-und ein Auslassventil 34 bzw. 35, die identisch aufgebaut sein können, aber in unterschiedlicher Richtung bezüglich des Hohlraums 16 eingebaut sind. Wird der Sohlenaufbau entlastet, z.B. beim Heben des Fußes, vergrößert sich der zwischen dem Oberteil 9 und dem Unterteil 11 befindliche Hohlraum 16, es entsteht ein Unterdruck; das mit dem Schuhinnenraum verbundene Einlassventil 34 verschließt sich. Außenluft kann durch das z.B. in der Mittelsohle 20 eingebrachten Einlassventil 34 in den Hohlraum 16 strömen. Je nach Temperatur der Außenluft verändert sich die Flexibilität des Materials, aus dem der Sohlenaufbau besteht. Ist die Temperatur der Außenluft niedrig, so nimmt die Flexibilität des Materials ab, wodurch sich der Widerstand, mit dem die Auswölbung 10 in die Einwölbung 12 gleitet, erhöht; es wird im hohen Maße Reibungswärme erzeugt. Diese erwärmt die in dem Hohlraum 16 befindliche Frischluft. Wird der Sohlenaufbau belastet, z.B. beim Senken des Fußes, verkleinert sich der Hohlraum 16, Überdruck entsteht; das Einlassventil 34, welches sich z.B. in dem Material der Mittelsohle 20 befindet, verschließt sich, die erwärmte Frischluft strömt durch ein Auslassventil 35 in den Schuhinnenraum.

Ist die Temperatur der Außenluft hingegen hoch, oder wurde der Sohlenaufbau bereits durch Reibungswärme erwärmt, wird das Material des Sohlenaufbaus, insbesondere das der Auswölbung 10, flexibel, wodurch der Widerstand, mit dem die Auswölbung 10 in die Einwölbung 12 gleitet, gemindert wird und im geringeren Maße Reibungswärme erzeugt wird.

Durch diese Materialeigenschaften reguliert sich die Wärmeerzeugung des Sohlenaufbaus selbsttätig. Die Außenluft wird bei Bedarf automatisch erwärmt, bevor diese in das Schuhinnere gepumpt wird.

Das Eindringen von Wasser und/oder Schmutz in den Sohlenaufbau wird z. B. durch eine Mikrofaserschicht verhindert.

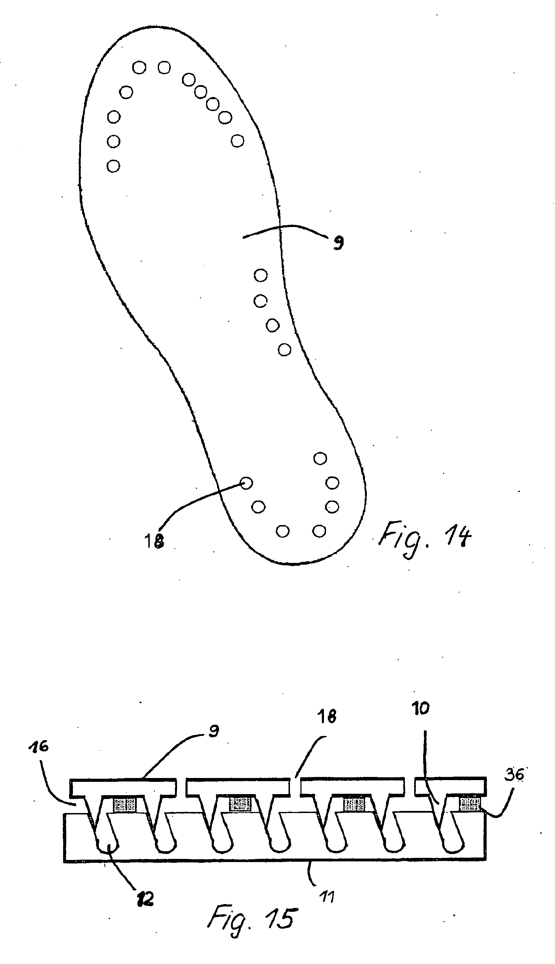

Die Temperaturempfindlichkeit kann noch gesteigert werden, wenn die Auswölbungen 10 in Form von Lamellen ausgebildet sind, wie sie die Figuren 15 und 1 zeigen.

Die Figuren 14 und 15 zeigen neben den Lamellen gleichzeitig die sich durch den erfindungsgemäßen Sohlenaufbau bietende Möglichkeit, eine Wärme erzeugende Einlegesohle herzustellen. Figur 14 zeigt eine solche Einlegesohle in einer Draufsicht, Figur 15 in einer Schnittdarstellung.

Oberteil 9 und Unterteil 11 bestehen hierbei aus einem flexiblen Kunststoff. Wird der Sohlenaufbau belastet, z.B. beim Senken des Fußes, werden Distanzstücke 36 zwischen Oberteil 9 und Unterteil 11 zusammengepresst. Das Oberteil 9 senkt sich durch den Widerstand, mit dem die als Lamelle ausgebildete Auswölbung 10 in die Einwölbung 12 gleitet und es wird Reibungswärme erzeugt. Ist der Sohlenaufbau durch Reibungswärme erwärmt, wird das Material des Sohlenaufbaus, insbesondere das der Auswölbung 10, flexibel, wodurch der Widerstand, mit dem die Auswölbung 10 in die Einwölbung 12 gleitet, gemindert wird. Dies bewirkt eine gleich bleibende Wärmeerzeugung. Maximaltemperaturen werden nicht überschritten, unabhängig von dem Belastungsintervall. Wird der Sohlenaufbau entlastet, z.B. beim Heben des Fußes, dehnen sich die Distanzstücke 35 aus, das Oberteil 9 hebt sich, wodurch die Auswölbung 10 aus der Einwölbung 12 gedrückt wird. Durch Lüftungsöffnungen 18, die vorteilhaft als Perforation ausgebildet sind, die sich in dem Oberteil 9 befindet, kann die Reibungswärme schneller und gleichmäßiger an den Schuhinnenraum bzw. den Fuß abgegeben werden. Es könnte auch vorgesehen sein, über die Fläche der Einlegsohle verschiedene Temperaturbereiche anzuordnen. Dies würde erreicht, indem die Auswölbungen 10 und/oder die Einwölbungen 12 unterschiedlich beschaffen sind. Oberteil 9 und Unterteil 11 sind vorteilhafter Weise durch Verkleben oder durch thermoplastisches Verschmelzen miteinander verbunden.

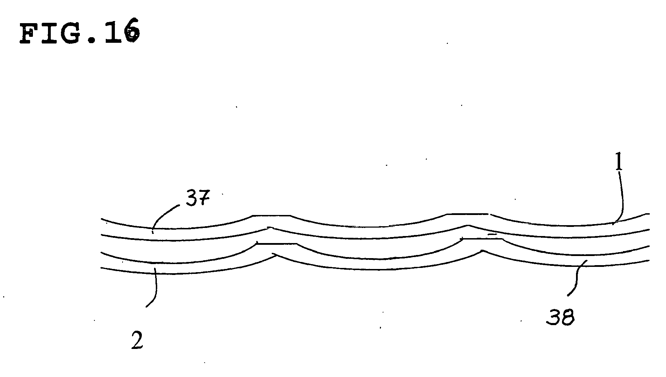

Figur 16 zeigt eine andere Form der Strukturierung der Formteile 1 und 2. die Strukturen werden hier nur durch flache, bogenförmige Auswölbungen 37, 38 gebildet, die an ihren Knickpunkten aneinander liegen und dort bei einer Auf-und Abbewegung Reibungswärme erzeugen.

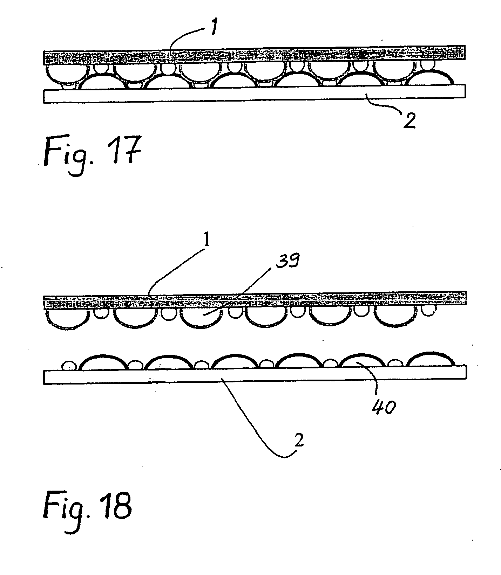

In den Figuren 17 und 18 ist eine weiter Variante der Formteile 1 und 2 mit noppenartigen Auswölbungen 39, 40 dargestellt. Die Auswölbungen 39. 40 sind um ein Rastermaß gegenseitig versetzt. Zwischen den Auswölbungen 39, 40 befinden sich noch kleinere Auswölbungen 41, 42. der Vorteil dieser Anordnung ist, dass beide Formteile 1 und 2 die gleiche Struktur besitzen und entweder gleiche Teile darstellen können oder aus einem gemeinsamen Rohmaterial herausgeschnitten sein können.

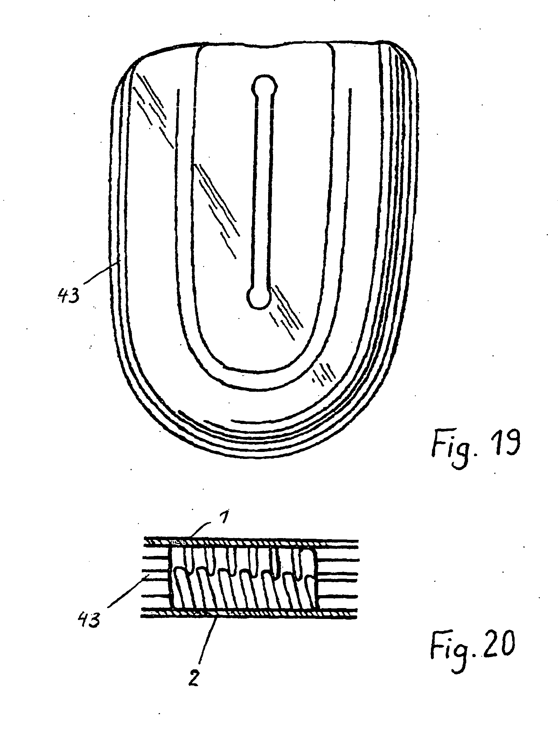

Die Figuren 19 und 20 zeigen eine als Luftkissen gestaltete Einrichtung. Die Formteile 1 und 2 sind an ihren Rändern 43 verschweißt, so dass ein luftdichter Hohlraum entsteht. Ein derartiges Luftkissen erzeugt wesentlich höhere Rückstellkräfte als solche Einrichtungen, deren Rückstellkraft ausschließlich durch die Elastizität der Formteile 1, 2 aufgebracht wird.

Um eine größere Wärmespeicherung zu erzielen, kann der Hohlraum auch mit einem Gel oder einer Flüssigkeit befüllt werden.

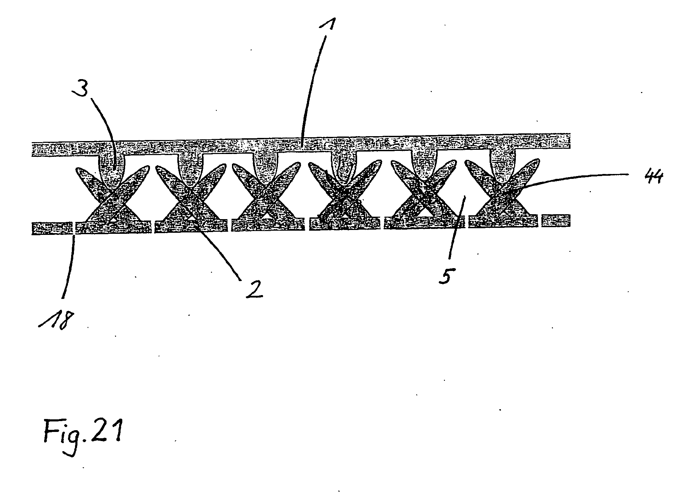

In Figur 21 ist eine weitere Variante gezeigt. Hier stehen den Auswölbungen 3 im oberen Formteil 1 kreuzweise angeordnete Noppen 44 gegenüber, die ebenfalls eine hohe Rückstellkraft aufweisen.

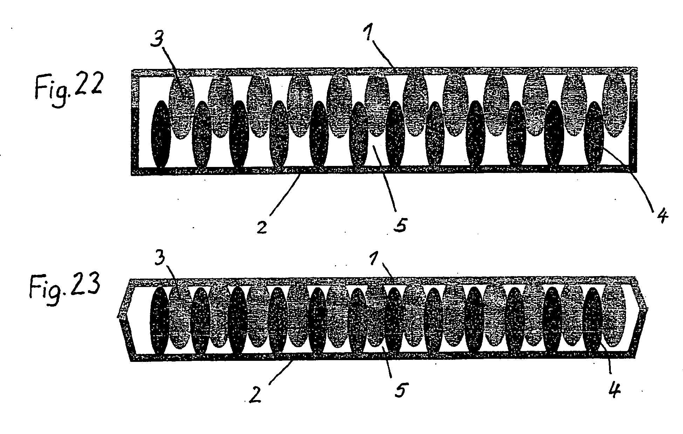

Die Figuren 22 und 23 zeigen eine Einrichtung mit tonnenförmigen Auswölbungen 3, 4, die wiederum ringförmig angeordnet sein können oder als rasterförmig angeordnete Noppen vorliegen können.

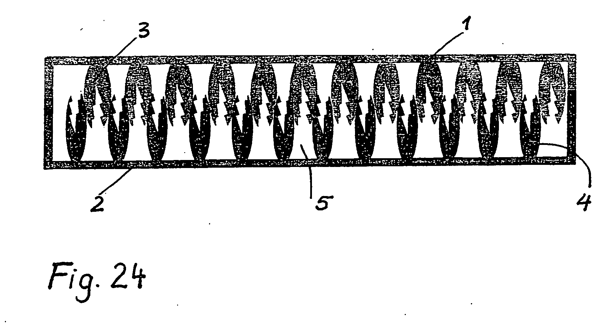

Nach Figur 24 sind die Auswölbungen 3, 4 aufgesplittet. Der Vorteil dieser Maßnahme ist, dass die Rückstellkräfte bei einem Verschleiß des Kunststoff-Materials an den Reibungsflächen ein Nachstellen bewirken. Auch der selbstregulierende Effekt wird unterstützt. Die Einrichtung kann wiederum als geschlossener Aufbau gestaltet sein, gegebenenfalls mit einem Gel, einem Gas oder einer Flüssigkeit befüllt.

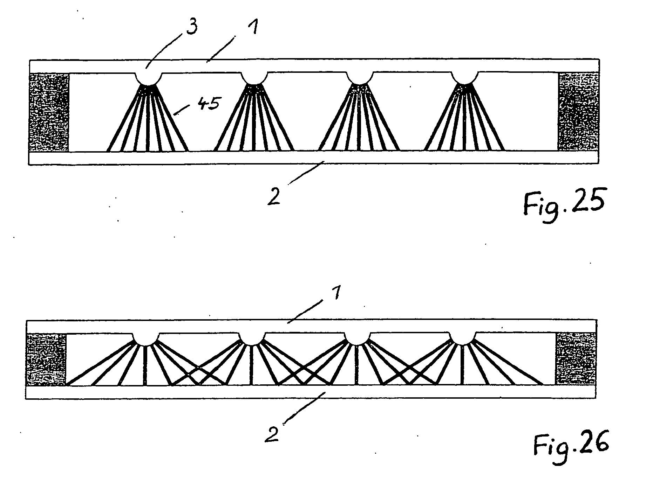

Die Figuren 25 und 26 zeigen noch eine Variante. Die Auswölbungen 3 im oberen Formteil 1 enden in bürstenartigen Fortsätzen 45, die sich bei einer Aufeinanderzu-Bewegung der Formteile 1, 2 seitlich verschieben.

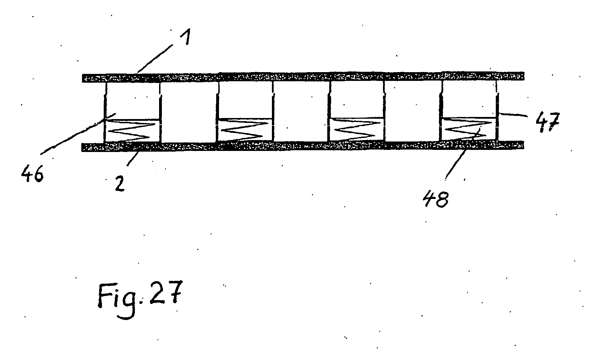

Figur 27 zeigt Abstandshalter 46 für die Beabstandung der Formteile 1 und 2. die Abstandshalter 46 sind als Hülsen 47 gestaltet, in denen eine Feder 48 für die nötige Rückstellkraft sorgt.

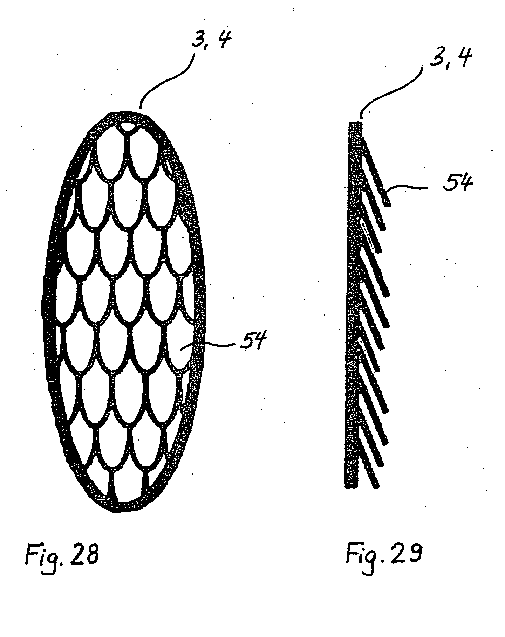

Die Figuren 28 und 29 zeigen ein Beispiel für eine Oberflächenstruktur der Auswölbungen 3 und/oder 4, die eine schuppenartige Form (Schuppen 54) aufweist und so den Reibungswiderstand wesentlich erhöht.

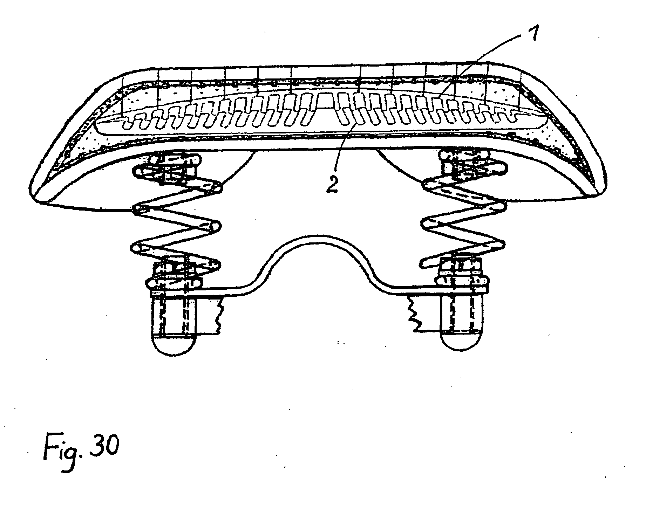

Figur 30 zeigt einen Querschnitt durch einen Fahrradsattel, in den die erfindungsgemäße Einrichtung zur Wärmeerzeugung integriert ist. Die Einrichtung sorgt durch die ständige Bewegung, die ein Fahrradsattel erfährt, dafür, dass der Fahrradsattel auch bei niedrigen Temperaturen angenehm warm bleibt. Der Fahrradsattel kann so aufgebaut sein, dass die Einrichtung zur Wärmeerzeugung herausgenommen werden kann, damit sie bei wärmeren Außentemperaturen durch einen Schaumstoffkern ersetzt werden kann.

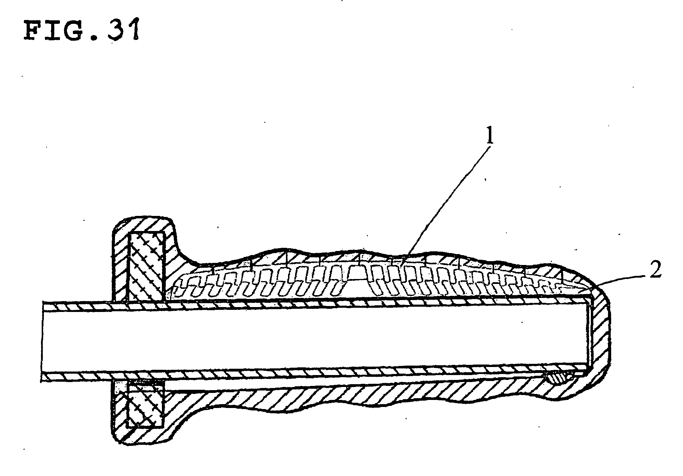

Figur 31 zeigt schließlich einen Querschnitt durch einen Fahrradhandgriff mit integrierter Einrichtung zur Wärmeerzeugung. Der Handgriff erwärmt sich, wenn er durch die Rüttelbewegungen beim Fahren gedrückt und dabei elastisch verformt wird.

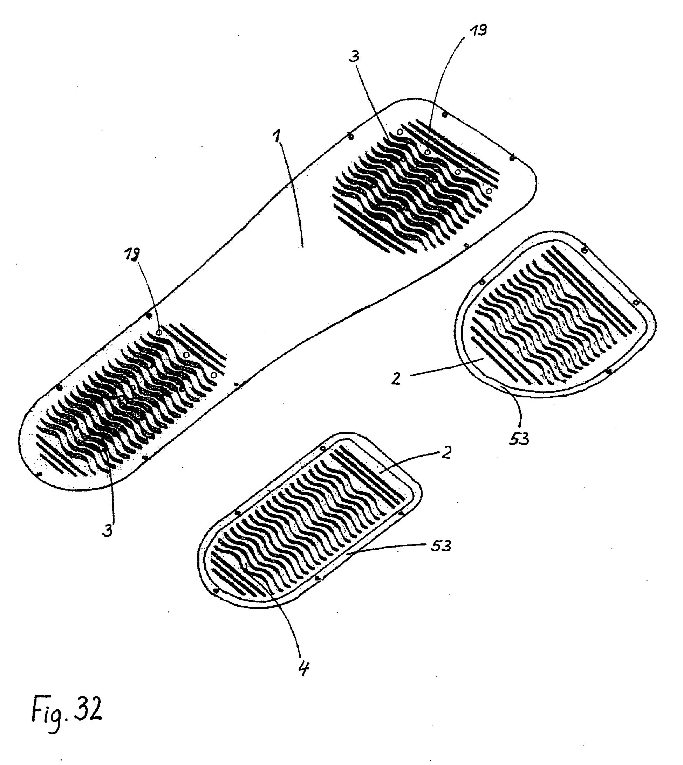

Figur 32 zeigt ein Formteil, welches hier als Teil einer austauschbaren Einlegesohle ausgebildet ist. je nach eingesetzter Einlegesohle können die Trageeigenschaften eines Schuhs verändert werden. Mit der Innensohle wird die Einlegesohle durch Verschlüsse, zum Beispiel Klettflächen oder mechanische Verschlüsse, verbunden. Sinnvollerweise verfügen die Formteile 1, 2 an ihren Rändern über Dichtungen 53, die eine Luftzirkulation über Lüftungslöcher 19 ermöglichen.

Die Auswölbungen 3, 4 sind hier wellenförmig angeordnet, wodurch der Reibewiderstand wesentlich erhöht wird.

Die unteren Formteile 2 können fester Bestandteil einer Schuhsohle sein.

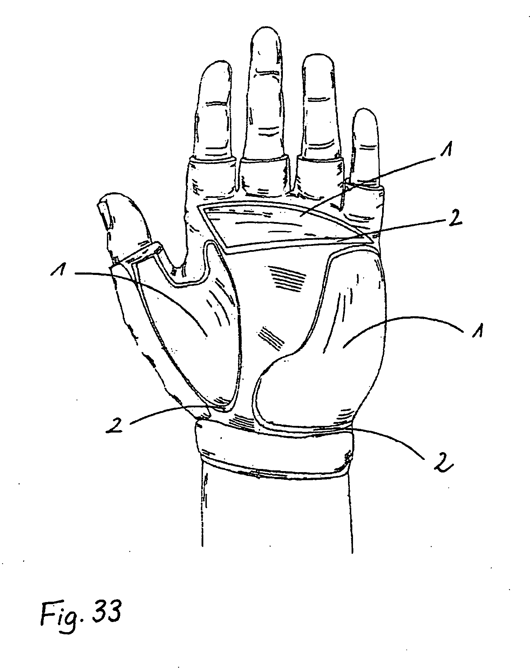

Figur 33 zeigt einen möglichen Einsatzbereich in Textilien, wie hier in einem Handschuh. Die Formteile 1 sind hier von außen aufgesetzt und können gegen andere ausgetauscht werden. Der Handschuh kann beispielsweise ein Arbeits- oder Skihandschuh sein.

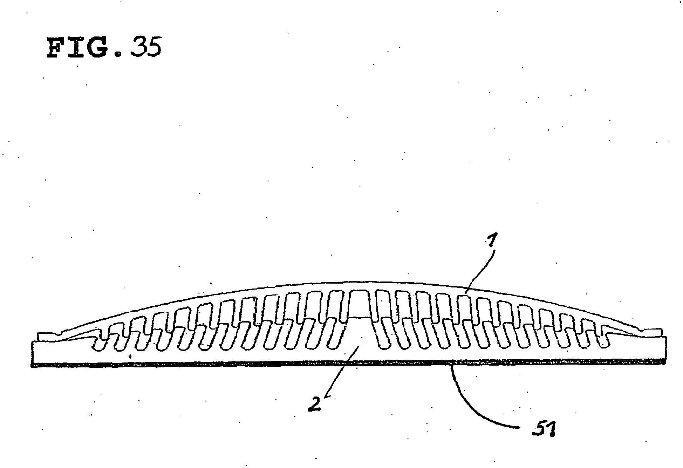

Figur 35 zeigt einen mehrteiligen Aufbau einer Schuhinnensohle, die Wärme erzeugt, den Fuß belüftet und gleichzeitig aufprallresorbierend wirkt.

Der Aufbau verfügt in der Mitte über ein Verbindungsrohr 50, in welchem sich ein Widerstand 49 befindet, der ein kontrolliertes Entweichen von verdrängter Luft aus dem hinteren in den vorderen Fußbereich ermöglicht. Hiermit werden die aufprallresorbierenden Eigenschaften im Bereich des Hinterfußes verändert.

Aus dem vorderen Bereich entweicht die zuvor eingepresste Luft aus Lüftungslöchern 19 im Vorderfußbereich. Das hat den Vorteil, dass besonders die kälteempfindlichen Zehen gewärmt werden.

Der hintere Bereich saugt beim Heben des Fußes Umgebungsluft an. Um ein Eindringen von Schmutz oder Wasser zu verhindern, wurde die Lufteintrittsöffnung mit einer Membran 48 verschlossen. Die Luftmenge, die beim Entlasten des hinteren Bereichs angesogen wird, kann durch ein Drosselventil 52 beeinflusst werden. Dies ermöglicht eine gezielte Wärmesteuerung. Ein Einlassventil 34 verhindert ein Entweichen der eingesogenen Luft nach außen.

Figur 35 zeigt eine Einrichtung analog zu Figur 1, nur dass sich unterhalb des unten liegenden Formteils 2 eine Isolationsschicht 51 befindet, welche die erzeugte Wärme in die Körperrichtung reflektiert.

### Bezugszeichenliste kinetischer Sohlenaufbau:

- 1: (erstes) Formteil
- 2: (zweites) Formteil
- 3: Auswölbung
- 4: Auswölbung
- 5: Ausnehmung
- 6: Kunststoffkügelchen
- 7: Trägersubstanz
- 8: Mittelsohle
- 9: Oberteil
- 10: Auswölbung
- 11: Unterteil
- 12: Einwölbung
- 13: Oberfläche
- 14: Scharnier
- 15: Verschluss
- 16: Hohlraum
- 17: Einlegesohle
- 18: Lüftungsöffnung
- 19: Lüftungslöcher
- 20: Mittelsohle
- 21: Aussparung
- 22: Auslagekanten
- 23: Außensohle
- 24: Abstandshalter
- 25: Flüssigkeit
- 26: Schlauch
- 27: Einwegdurchtrittsöffnung
- 28: Verbindungsbolzen
- 29: Öffnung
- 30: Widerhaken
- 31: Einkerbung
- 32: Materialaussparung
- 33: Schuhoberteil
- 34: Einlassventil
- 35: Auslassventil
- 36: Distanzstück
- 37: Auswölbung
- 38: Auswölbung
- 39: Auswölbung
- 40: Auswölbung
- 41: Auswölbung
- 42: Auswölbung
- 43: Ränder
- 44: Noppen
- 45: Fortsätze
- 46: Abstandshalter
- 47: Feder
- 48: Membran
- 49: Widerstand
- 50: Verbindungsrohr
- 51: Isolationsschicht
- 52: Drosselventil
- 53: Dichtung
- 54: Schuppen

## Patentansprüche

1. Einrichtung zur Umwandlung von Bewegungsenergie in Wärme, wobei diese zwei in Hauptrichtung der Bewegung hintereinander angeordnete Formteile (1, 2) aufweist, von denen mindestens eines aus einem Polymer-Kunststoff besteht und elastisch beweglich ist und die an ihren sich gegenüberliegenden Flächen so strukturiert sind, dass sich bei einer Aufeinanderzu-Bewegung der Formteile (1, 2) eine Reibungswärme erzeugende Flächenreibung ergibt, wobei ein erstes Formteil (1) rippen- oder noppenförmige Auswölbungen (3) aufweist, die in gegenüberliegende Aussparungen (5) zwischen Auswölbungen (4) eines zweiten Formteils (2) so eingreifen, dass sich die gegenüberliegenden Auswölbungen (3, 4) des ersten und zweiten Formteils (1, 2) aneinander reiben **dadurch gekennzeichnet, dass** die Formteile (1, 2) aus einem elastischen Kunststoff bestehen.

2. Einrichtung nach Anspruch 1, **dadurch gekennzeichnet, dass**
die Auswölbungen (3, 4) tonnenförmig ausgebildet sind.

3. Einrichtung nach einem der Ansprüche 1 oder 2 , **dadurch gekennzeichnet, dass**
die Auswölbungen (3, 4) aufgesplittet sind.

4. Einrichtung nach Anspruch 1 , **dadurch gekennzeichnet, dass**
die Auswölbungen (3) des ersten Formteils (1) noppenförmig ausgebildet sind und zwischen kreuzweise angeordnete Noppen (44) des zweiten Formteils (2) eingreifen.

5. Einrichtung nach Anspruch 1 , **dadurch gekennzeichnet, dass**
die Auswölbungen (3) eines Formteils (1, 2) in bürstenartigen Fortsätzen (45) enden.

6. Einrichtung nach Anspruch 1 , **dadurch gekennzeichnet, dass**
die Auswölbungen (3) und die gegenüberliegenden Aussparungen (5) verschiedene Neigungswinkel aufweisen.

7. Einrichtung nach einem der vorhergehenden Ansprüche, **dadurch gekennzeichnet, dass**
die Auswölbungen (3) und die gegenüberliegenden Aussparungen (5) ringförmig angelegt sind.

8. Einrichtung nach einem der vorhergehenden Ansprüche, **dadurch gekennzeichnet, dass**
der zwischen dem ersten und zweiten Formteil (1, 2) gebildete Hohlraum mit Luft, einem Gas, einem Gel, einem Pulver oder einer Flüssigkeit gefüllt ist.

9. Einrichtung nach einem der vorhergehenden Ansprüche, **dadurch gekennzeichnet, dass**
die Auswölbungen (3) und die gegenüberliegenden Aussparungen (5) streifenförmig angelegt sind.

10. Einrichtung nach einem der vorhergehenden Ansprüche, **dadurch gekennzeichnet, dass**
die Oberfläche (13) mindestens eines der Formteile (1, 2) aufgeraut oder in sich strukturiert ist.

11. Einrichtung nach einem der vorhergehenden Ansprüche, **dadurch gekennzeichnet, dass**
mindestens eines der Formteile (1, 2) mit einem Wärme speichernden Material in Verbindung steht.

12. Einrichtung nach Anspruch 11, **dadurch gekennzeichnet, dass**
das Wärme speichernde Material ein Latentwärmespeicher mit einem mikroverkapselten Speichermedium ist.

13. Einrichtung nach Anspruch 12, **dadurch gekennzeichnet, dass**
der Latentwärmespeicher mit einem Indikatorfarbstoff versehen ist.

14. Einrichtung nach einem der vorhergehenden Ansprüche, **dadurch gekennzeichnet, dass**
Das erste und das zweite Formteil (1, 2) im unbelasteten Zustand mindestens teilweise voneinander beabstandet sind.

15. Einrichtung nach Anspruch 1, **dadurch gekennzeichnet, dass**
das erste und das zweite Formteil (1, 2) durch Distanzstücke (36) voneinander beabstandet sind.

16. Einrichtung nach einem der vorhergehenden Ansprüche, **dadurch gekennzeichnet, dass**
das erste und das zweite Formteil (1, 2) aus einem Stück hergestellt und mit einem Scharnier (14) verbunden sind.

17. Einrichtung nach Anspruch 15, **dadurch gekennzeichnet, dass**
das erste und das zweite Formteil (1, 2) durch einen Verschluss (15) miteinander verbunden sind.

18. Einrichtung nach einem der Ansprüche 1 bis 14, **dadurch gekennzeichnet, dass**
das erste und das zweite Formteil (1, 2) miteinander verklebt sind.

19. Einrichtung nach einem der Ansprüche 1 bis 14, **dadurch gekennzeichnet, dass**
das erste und das zweite Formteil (1, 2) durch thermoplastisches Verschmelzen miteinander verbunden sind.

20. Einrichtung nach einem der vorhergehenden Ansprüche, **dadurch gekennzeichnet, dass**
mindestens eines der Formteile (1, 2) mit einem Indikatorfarbstoff versehen ist.

21. Einrichtung nach einem der vorhergehenden Ansprüche, **dadurch gekennzeichnet, dass**
sich innerhalb des Materials der Formteile (1, 2) Metall in Form von Draht und/oder Metallpulver befindet.

22. Einrichtung nach einem der vorhergehenden Ansprüche, **dadurch gekennzeichnet, dass**
die Formteile (1, 2) aus einem elektroaktiven oder thermoaktiven Polymer bestehen.

23. Einrichtung nach einem der vorhergehenden Ansprüche, **dadurch gekennzeichnet, dass**
sie Teil eines Sohlenaufbaus für Schuhe ist und das erste Formteil (1) ein oberes, elastisch ausgebildetes Sohlenteil (9) und das zweite Formteil (2) ein unteres Sohlenteil (11) bildet, wobei die Sohlenteile (9, 11) mindestens im Fersenbereich des Schuhs vorgesehen sind.

24. Einrichtung nach Anspruch 23, **dadurch gekennzeichnet, dass** sich innerhalb oder unterhalb des unteren Sohlenteils (11) ein sich vom Fersenbereich bis mindestens in einen weiteren Teil des Schuhs erstreckender, mit einer Flüssigkeit (25) gefüllter Schlauch (26) befindet, in dessen ringförmigem Verlauf mindestens eine Einwegdurchtrittsöffnung (27) angeordnet ist.

25. Einrichtung nach Anspruch 24, **dadurch gekennzeichnet, dass** der Schlauch (26) aus einem elastischen Material besteht.

26. Einrichtung nach Anspruch 24 oder 25, **dadurch gekennzeichnet, dass**
der Schlauch (26) mit einem Latentwärmespeicher in Verbindung steht.

27. Einrichtung nach einem der Ansprüche 24 bis 26, **dadurch gekennzeichnet, dass** der Schlauch (26) mit einem Indikatorfarbstoff versehen ist.

28. Einrichtung nach einem der Ansprüche 24 bis 26, **dadurch gekennzeichnet, dass**
der weitere Teil des Schuhs der Vorderfussbereich, der Zehenbereich, der Spannbereich oder der Wadenbereich ist.

29. Einrichtung nach einem der Ansprüche 23 bis 28, **dadurch gekennzeichnet, dass**
das obere und das untere Sohlenteil (9, 11) in ein weiteres Sohlenteil (20) eingebettet sind.

30. Einrichtung nach Anspruch 29, **dadurch gekennzeichnet, dass** das obere und das untere Sohlenteil (9, 11) an Auflagekanten (12) an dem weiteren Sohlenteil (20) gehalten sind.

31. Einrichtung nach einem der Ansprüche 23 bis 30, **dadurch gekennzeichnet, dass**
das obere und das untere Sohlenteil (9, 11) miteinander zu einer Einlegesohle verbunden sind.

32. Einrichtung nach einem der Ansprüche 23 bis 31, **dadurch gekennzeichnet, dass**
das obere und untere Sohlenteil (9, 11) hufeisenförmig ausgebildet sind.

33. Einrichtung nach einem der Ansprüche 23 bis 31, **dadurch gekennzeichnet, dass**
das obere und das untere Sohlenteil (9, 11) Lüftungsöffnungen (18) aufweisen.

34. Einrichtung nach Anspruch 33. **dadurch gekennzeichnet, dass** die Lüftungsöffnungen (18) mit mindestens einem Ventil verschlossen sind.

35. Einrichtung nach Anspruch 34, **dadurch gekennzeichnet, dass** die Lüftungsöffnungen (18) mit mindestens einem Einlassventil (34) und einem Auslassventil (35) verschlossen sind.

36. Einrichtung nach einem der Ansprüche 23 bis 35, **dadurch gekennzeichnet, dass**
das obere und das untere Sohlenteil (9, 11) mit einem Verbindungselement (28) verbindbar sind.

37. Einrichtung nach Anspruch 36, **dadurch gekennzeichnet, dass** das Verbindungselement (28) rechteckförmige Widerhaken (30) aufweist, die hinter schlitzförmige Aussparungen (29) in dem unteren Sohlenteil (11) greifen.

38. Einrichtung nach einem der Ansprüche 23 bis 35, **dadurch gekennzeichnet, dass**
das obere und das untere Sohlenteil (9, 11) durch Verkleben miteinander verbunden sind.

39. Einrichtung nach einem der Ansprüche 23 bis 35, **dadurch gekennzeichnet, dass**
das obere und das untere Sohlenteil (9, 11) durch thermoplastisches Verschmelzen miteinander verbunden sind.

40. Einrichtung nach einem der Ansprüche 23 bis 39, **dadurch gekennzeichnet, dass**
über dem oberen Sohlenteil (9) eine anatomisch geformte Einlegesohle (17) angeordnet ist.

41. Einrichtung nach Anspruch 40, **dadurch gekennzeichnet, dass** die Einlegesohle (17) Lüftungslöcher (19) aufweist.

42. Einrichtung nach Anspruch 41, **dadurch gekennzeichnet, dass** die Einlegesohle (17) an ihrer Unterseite Abstandshalter (24) aufweist.

43. Einrichtung nach einem der Ansprüche 24 bis 42, **dadurch gekennzeichnet, dass**
der Schlauch (26) durch teilweise Verschweissen oder Verkleben der Sohlenteile (9, 11) hergestellt ist.

44. Einrichtung nach einem der Ansprüche 24 bis 43, **dadurch gekennzeichnet, dass**
aus dem Material der Sohlenteile (9, 11) Haltevorrichtungen für den Schlauch (26) herausgebildet sind.

45. Einrichtung nach einem der Ansprüche 23 bis 44, **dadurch gekennzeichnet, dass**
die Sohlenteile (9, 11) mindestens teilweise aus Hartgummi bestehen.

46. Einrichtung nach einem der Ansprüche 23 bis 45, **dadurch gekennzeichnet, dass**
die Sohlenteile (9, 11) mindestens teilweise aus Nylon bestehen.

47. Einrichtung nach einem der Ansprüche 23 bis 45, **dadurch gekennzeichnet, dass**
die Sohlenteile (9, 11) mindestens teilweise aus EVA bestehen.

48. Einrichtung nach einem der Ansprüche 23 bis 45, **dadurch gekennzeichnet, dass**
die Sohlenteile (9, 11) mindestens teilweise aus einem Kohlefaserverbund bestehen.

49. Einrichtung nach einem der Ansprüche 1 bis 22, **dadurch gekennzeichnet, dass**
sie Teil eines Aufbaus eines Fahrradsattels ist.

50. Einrichtung nach einem der Ansprüche 1 bis 22, **dadurch gekennzeichnet, dass**
sie Teil eines Aufbaus eines Pferdesattels ist.

51. Einrichtung nach einem der Ansprüche 1 bis 22, **dadurch gekennzeichnet, dass**
sie Teil eines Aufbaus eines Fahrradhandgriffs ist.

52. Einrichtung nach einem der Ansprüche 1 bis 22, **dadurch gekennzeichnet, dass**
sie Teil eines Aufbaus eines Handschuhs ist.

53. Einrichtung nach einem der Ansprüche 1 bis 22, **dadurch gekennzeichnet, dass**
sie Teil eines Aufbaus eines Schuhoberteils ist.

54. Einrichtung nach einem der vorhergehenden Ansprüche, **dadurch gekennzeichnet, dass**
mindestens eines der Formteile (1, 2) mit einem Wärme isolierenden Material (51) verbunden ist.

55. Einrichtung nach einem der vorhergehenden Ansprüche, **dadurch gekennzeichnet, dass**
mindestens eines der Formtelle (1, 2) Bestandteil einer Einlegesohle (17) ist.

## Claims

1. Set-up for the transformation of kinetic energy into heat that has two mouldings (1,2) disposed one behind the other in the principal direction of movement, at least one of which consists of a plastics polymer and can move elastically and whose mutually opposite faces are structured in such a manner that, as these mouldings (1, 2) move towards another, surface friction is produced which generates heat, where a first moulding (1) has rib or pimple shaped protuberances (3) that engage into recesses (5) on the opposite side between protuberances (4) of a second moulding (2) in such a manner that the mutually opposite protuberances (3,4) of the first and second moulding (1, 2) rub against one another, **characterised in that** the mouldings (1, 2) consist of elastic plastic material.

2. Set-up in accordance with Claim 1, **characterised in that** the protuberances (3), 4) are barrel-shaped.

3. Set-up in accordance with one of Claims 1 or 2, **characterised in that** the protuberances (3,4) are split open.

4. Set-up in accordance with Claim 1, **characterised in that** the protuberances (3) of the first moulding (1) are in the form of pimples and engage between pimples (44) in of the second mouldings (2) in a crosswise array.

5. Set-up in accordance with Claim 1, **characterised in that** the protuberances (3) of a moulding (1, 2) end in brush-like extensions (45).

6. Set-up in accordance with Claim 1, **characterised in that** the protuberances (3) and the recesses on the opposite side (5) have different angles of inclination.

7. Set-up in accordance with Claim 1, **characterised in that** the protuberances (3) and the recesses on the opposite side (5) are disposed in a ring shaped array.

8. Device in accordance with one of the preceding Claims, **characterised in that** the cavity formed between the first and the second moulding (1, 2) is filled with air, a gas, a gel, a powder or a liquid.

9. Set-up in accordance with one of the preceding Claims, **characterised in that** the protuberances (3) and the recesses on the opposite side (5) are disposed in a strip-like array.

10. Set-up in accordance with one of the preceding Claims, **characterised in that** the surface (13) of at least one moulding (1,2) has been roughened or is naturally structured.

11. Set-up in accordance with one of the preceding Claims, **characterised in that** at least one of the mouldings (1, 2) is in contact with a material that stores heat.

12. Set-up in accordance with Claim 11, **characterised in that** the material that stores heat is a latent heat reservoir with a microencapsulated storage medium.

13. Set-up in accordance with Claim 12, **characterised in that** the latent heat reservoir is provided with an indicator dye.

14. Set-up in accordance with one of the preceding Claims, **characterised in that** the first and the second moulding (1, 2) when in unloaded conditions are at least in part at a distance from one another.

15. Set-up in accordance with Claim 1, **characterised in that** the first and the second moulding (1,2) are kept at a distance from one another my means of spacers (36).

16. Set-up in accordance with one of the preceding Claims, **characterised in that** the first and the second moulding (1, 2) are formed as a single piece linked by means of a strap hinge (14).

17. Set-up in accordance with Claim 15, **characterised in that** the first and the second moulding (1,2) are linked by means of a fastener (15).

18. Set-up in accordance with one of Claims 1 to 14, **characterised in that** the first and the second moulding (1,2) are bonded to each other.

19. Set-up in accordance with one of Claims 1 to 14, **characterised in that** the first and the second moulding (1,2) are bonded to each other by means of thermoplastic fusion.

20. Set-up in accordance with one of the preceding Claims, **characterised in that** at least one of the mouldings (1, 2) is provided with an indicator dye.

21. Set-up in accordance with one of of the preceding Claims, **characterised in that** metal in the form of wire and/or metal powder is present in the material of the mouldings (1,2).

22. Set-up in accordance with one of the preceding Claims, **characterised in that** the mouldings (1, 2) consist of an electro-active or thermoactive polymer.

23. Set-up in accordance with one of the preceding Claims, **characterised in that** it forms part of the structure of the sole for shoes and that the first moulding (1) forms an upper, elastically designed part (9) of the sole and that the second moulding (2) forms a lower part (11) of the sole, where the sole parts (9,11) are provided at least in the heel area of the shoe.

24. Set-up in accordance with Claim 23, **characterised in that** within or below the lower part of the sole (11) a tube (26) filled with a liquid (25) extends from the heel area to at least a further part of the shoe , where the ring like array of the tube is provided with at least a passage opening one way (27).

25. Set-up in accordance with Claim 24, **characterised in that** the tube (26) is made of an elastic material.

26. Set-up in accordance with Claim 24 or 25, **characterised in that** the tube (26) is connected to a latent heat reservoir.

27. Set-up in accordance with one of Claims 24 to 26, **characterised in that** the house is provided with an indicator dye.

28. Set-up in accordance with one of Claims 24 to 26, **characterised in that** the further part of the shoe is the forward area of the foot, the area of the toes, the area for tightening or the calf area.

29. Set-up in accordance with one of Claims 23 to 28, **characterised in that** the upper and the lower sole parts (9, 11) are embedded in a further part (20) of the sole.

30. Set-up in accordance with Claim 24, **characterised in that** the upper and the lower sole part (9, 11) are held by supporting edges (12) on the further part (20) of the sole.

31. Set-up in accordance with one of Claims 23 to 30, **characterised in that** the upper and the lower sole parts (9, 11) are bonded to one another to produce an insole.

32. Set-up in accordance with one of Claims 23 to 31, **characterised in that** the upper and the lower sole parts (9, 11) are of a horseshoe shape.

33. Set-up in accordance with one of Claims 23 to 31, **characterised in that** the upper and the lower sole parts (9, 11) have ventilation openings.

34. Set-up in accordance with Claim 33, **characterised in that** the ventilation openings (18), are closed off with at least one valve.

35. Set-up in accordance with Claim 34, **characterised in that** the ventilation openings (18), are closed off with at least one inlet valve (34) and one outlet valve (35).

36. Set-up in accordance with one of Claims 23 to 35, **characterised in that** the upper and the lower sole parts (9, 11) can be bonded by means of a connecting element (28).

37. Set-up in accordance with one of Claim 36, **characterised in that** the connecting element (28) has rectangular barbs (30) which engage behind slot-shaped recesses (29) in the lower sole part (11).

38. Set-up in accordance with one of Claims 23 to 35, **characterised in that** the upper and the lower sole parts (9, 11) are adhesive bonded to one another.

39. Set-up in accordance with one of Claims 23 to 35, **characterised in that** the upper and the lower sole parts (9, 11) are bonded to one another by thermoplastic fusion.

40. Set-up in accordance with one of Claims 23 to 39, **characterised in that** an anatomically shaped insole (17) is disposed above the upper sole part (9).

41. Set-up in accordance with Claim 40, **characterised in that** the insole (17), has ventilation holes (19).

42. Set-up in accordance with Claim 41, **characterised in that** the insole (17), has spacers (24) on its underside.

43. Set-up in accordance with one of Claims 24 to 42, **characterised in that** the tube (26) is produced by partial welding or adhesive bonding of the sole parts (9, 11).

44. Set-up in accordance with one of Claims 24 to 43, **characterised in that** retaining portions for the tube (26) are formed from the material of the sole parts (9, 11).

45. Set-up in accordance with one of Claims 23 to 44, **characterised in that** the sole parts (9, 11) are made at least in part from hard rubber.

46. Set-up in accordance with one of Claims 23 to 45, **characterised in that** the sole parts (9, 11) are made at least in part from nylon.

47. Set-up in accordance with one of Claims 23 to 45, **characterised in that** the sole parts (9, 11) are made at least in part from EVA.

48. Set-up in accordance with one of Claims 23 to 45, **characterised in that** the sole parts (9, 11) are made at least in part from a carbon fibre composite.

49. Set-up in accordance with one of Claims 1 to 22, **characterised in that** they form part of the structure of a bicycle saddle.

50. Set-up in accordance with one of Claims 1 to 22, **characterised in that** they form part of the structure of a saddle for a horse.

51. Set-up in accordance with one of Claims 1 to 22, **characterised in that** they form part of the structure of the handles of a bicycle handle-bar.

52. Set-up in accordance with one of Claims 1 to 22, **characterised in that** they form part of the structure of a glove.

53. Set-up in accordance with one of Claims 1 to 22, **characterised in that** they form part of the structure of the uppers of a shoe.

54. Set-up in accordance with one of the preceding Claims, **characterised in that** at least one of the mouldings (1, 2) is bonded to a heat insulating material (51).

55. Set-up in accordance with one of the preceding Claims, **characterised in that** at least one of the mouldings (1, 2) forms part of an insole (17).

## Revendications

1. Dispositif de conversion d'énergie cinétique en chaleur, celui-ci présentant deux pièces moulées (1, 2), disposées l'une derrière l'autre dans le sens principal du mouvement, dont au moins une est en matière plastique polymère et est élastiquement mobile, et qui sont structurées sur leurs faces situées en vis-à-vis l'une de l'autre, de manière telle qu'en cas de déplacement des pièces moulées (1, 2) l'une en direction de l'autre, il en résulte un frottement de surface produisant de la chaleur de friction, où une première pièce moulée (1) présente des saillies (3) en forme de nervures ou de picots qui s'engagent dans des évidements (5), situés en vis-à-vis, entre des saillies (4) d'une deuxième pièce moulée (2), de telle sorte que les saillies (3, 4), situées en vis-à-vis, des première et deuxième pièces moulées (1, 2) frottent les unes contre les autres, **caractérisé en ce que** les pièces moulées (1, 2) sont constituées d', **caractérisé en ce que** les pièces moulées (1, 2) sont constituées d'une matière plastique élastique.

2. Dispositif selon la revendication 1, **caractérisé en ce que** les saillies (3, 4) sont réalisées en forme de tonneaux.

3. Dispositif selon l'une des revendications 1 ou 2, **caractérisé en ce que** les saillies (3, 4) sont fendues.

4. Dispositif selon la revendication 1, **caractérisé en ce que** les saillies (3) de la première pièce moulée (1) sont réalisées sous forme de picots et s'engagent entre des picots (44), disposés en croix, de la deuxième pièce moulée (2).

5. Dispositif selon la revendication 1, **caractérisé en ce que** les saillies (3) d'une pièce moulée (1, 2) se terminent par des prolongements (45) en forme de brosses.

6. Dispositif selon la revendication 1, **caractérisé en ce que** les saillies (3) et les évidements (5) situés en vis-à-vis présentent des angles d'inclinaison différents.

7. Dispositif selon l'une quelconque des revendications précédentes, **caractérisé en ce que** les saillies (3) et les évidements (5) situés en vis-à-vis sont disposés en forme d'anneaux.

8. Dispositif selon l'une quelconque des revendications précédentes, **caractérisé en ce que** la cavité formée entre les première et deuxième pièces moulées (1, 2) est remplie d'air, d'un gaz, d'une poudre ou d'un liquide.

9. Dispositif selon l'une quelconque des revendications précédentes, **caractérisé en ce que** les saillies (3) et les évidements (5) situés en vis-à-vis sont disposés en forme de bandes.

10. Dispositif selon l'une quelconque des revendications précédentes, **caractérisé en ce que** la surface (13) d'au moins une des pièces moulées (1, 2) est rendue rugueuse ou est structurée en soi.

11. Dispositif selon l'une quelconque des revendications précédentes, **caractérisé en ce qu'**au moins une des pièces moulées (1, 2) est reliée à un matériau accumulant la chaleur.

12. Dispositif selon la revendication 11, **caractérisé en ce que** le matériau accumulant la chaleur est un accumulateur de chaleur latente comportant un fluide accumulateur en microcapsules.

13. Dispositif selon la revendication 12, **caractérisé en ce que** l'accumulateur de chaleur latente est pourvu d'un colorant indicateur.

14. Dispositif selon l'une quelconque des revendications précédentes, **caractérisé en ce que**, à l'état non sollicité, la première et la deuxième pièce moulée (1, 2) sont espacées au moins en partie l'une de l'autre.

15. Dispositif selon la revendication 1, **caractérisé en ce que** la première et la deuxième pièce moulée (1, 2) sont espacées l'une de l'autre par des pièces d'écartement (36).

16. Dispositif selon l'une quelconque des revendications précédentes, **caractérisé en ce que** la première et la deuxième pièce moulée (1, 2) sont réalisées d'un seul tenant et sont reliées par une charnière (14).

17. Dispositif selon la revendication 15, **caractérisé en ce que** la première et la deuxième pièce moulée (1, 2) sont reliées l'une à l'autre par une fermeture (15).

18. Dispositif selon l'une des revendications 1 à 14, **caractérisé en ce que** la première et la deuxième pièce moulée (1, 2) sont collées l'une à l'autre.

19. Dispositif selon l'une des revendications 1 à 14, **caractérisé en ce que** la première et la deuxième pièce moulée (1, 2) sont reliées l'une à l'autre par fusion thermoplastique.

20. Dispositif selon l'une quelconque des revendications précédentes, **caractérisé en ce qu'**au moins une des pièces moulées (1, 2) est pourvue d'un colorant indicateur.

21. Dispositif selon l'une quelconque des revendications précédentes, **caractérisé en ce qu'**à l'intérieur du matériau des pièces moulées (1, 2), il est prévu du métal sous forme de fil et/ou de poudre métallique.

22. Dispositif selon l'une quelconque des revendications précédentes, **caractérisé en ce que** les pièces moulées (1, 2) sont constituées d'un polymère électroactif ou thermoactif.

23. Dispositif selon l'une quelconque des revendications précédentes, **caractérisé en ce qu'**il fait partie d'une structure de semelle pour des chaussures, et la première pièce moulée (1) forme une partie de semelle supérieure (9), réalisée de façon élastique, et la deuxième pièce moulée (2) forme une partie de semelle inférieure (11), les parties de semelle (9, 11) étant prévues au moins dans la région du talon de la chaussure.

24. Dispositif selon la revendication 23, **caractérisé en ce qu'**il est prévu, à l'intérieur de la partie de semelle inférieure (11) ou en dessous de celle-ci, un tube (26) qui est rempli d'un liquide (25) et s'étend depuis la région du talon au moins jusque dans une autre partie de la chaussure, et sur le tracé annulaire duquel est disposé au moins un orifice de passage unidirectionnel (27).

25. Dispositif selon la revendication 24, **caractérisé en ce que** le tube (26) est constitué d'un matériau élastique.

26. Dispositif selon la revendication 24 ou 25, **caractérisé en ce que** le tube (26) est relié à un accumulateur de chaleur latente.

27. Dispositif selon l'une des revendications 24 à 26, **caractérisé en ce que** le tube (26) est pourvu d'un colorant indicateur.

28. Dispositif selon l'une des revendications 24 à 26, **caractérisé en ce que** l'autre partie de la chaussure est la partie antérieure du pied, la région des doigts de pied, la région du cou-de-pied ou la région du mollet.

29. Dispositif selon l'une des revendications 23 à 28, **caractérisé en ce que** la partie supérieure et la partie inférieure de la semelle (9, 11) sont encastrées dans une partie de semelle (20) supplémentaire.

30. Dispositif selon la revendication 29, **caractérisé en ce que** la partie supérieure et la partie inférieure de la semelle (9, 11) sont maintenues par des bords d'appui (12) sur la partie de semelle (20) supplémentaire.

31. Dispositif selon l'une des revendications 23 à 30, **caractérisé en ce que** la partie supérieure et la partie inférieure de la semelle (9, 11) sont liées l'une à l'autre pour former une semelle intérieure.

32. Dispositif selon l'une des revendications 23 à 31, **caractérisé en ce que** la partie supérieure et la partie inférieure de la semelle (9, 11) réalisées sous forme de fer à cheval.

33. Dispositif selon l'une des revendications 23 à 31, **caractérisé en ce que** la partie supérieure et la partie inférieure de la semelle (9, 11) présentent des orifices de ventilation (18).

34. Dispositif selon la revendication 33, **caractérisé en ce que** les orifices de ventilation (18) sont fermés par au moins une valve.

35. Dispositif selon la revendication 34, **caractérisé en ce que** les orifices de ventilation (18) sont fermés par au moins une valve d'entrée (34) et une valve de sortie (35).

36. Dispositif selon l'une des revendications 23 à 35, **caractérisé en ce que** la partie supérieure et la partie inférieure de la semelle (9, 11) peuvent être reliées à un élément de liaison (28).

37. Dispositif selon la revendication 36, **caractérisé en ce que** l'élément de liaison (28) présente des barbes (30) rectangulaires qui s'engagent derrière des évidements (29) en forme de fentes dans la partie de semelle inférieure (11).

38. Dispositif selon l'une des revendications 23 à 35, **caractérisé en ce que** la partie supérieure et la partie inférieure de la semelle (9, 11) sont reliées l'une à l'autre par collage.

39. Dispositif selon l'une des revendications 23 à 35, **caractérisé en ce que** la partie supérieure et la partie inférieure de la semelle (9, 11) sont reliées l'une à l'autre par fusion thermoplastique.

40. Dispositif selon l'une des revendications 23 à 39, **caractérisé en ce qu'**une semelle intérieure (17) de forme anatomique est disposée au-dessus de la partie de semelle supérieure (9).

41. Dispositif selon la revendication 40, **caractérisé en ce que** la semelle intérieure (17) présente des orifices de ventilation (19).

42. Dispositif selon la revendication 41, **caractérisé en ce que** la semelle intérieure (17) présente des éléments d'espacement (24) sur sa face inférieure.

43. Dispositif selon l'une des revendications 24 à 42, **caractérisé en ce qu'**un tube (26) est réalisé par soudage ou collage partiel des parties de semelle (9, 11).

44. Dispositif selon l'une des revendications 24 à 43, **caractérisé en ce que** des moyens de maintien sont façonnés dans le matériau des parties de semelle (9, 11).

45. Dispositif selon l'une des revendications 23 à 44, **caractérisé en ce que** les parties de semelle (9, 11) sont constituées au moins en partie de caoutchouc durci.

46. Dispositif selon l'une des revendications 23 à 45, **caractérisé en ce que** les parties de semelle (9, 11) sont constituées au moins en partie de nylon.

47. Dispositif selon l'une des revendications 23 à 45, **caractérisé en ce que** les parties de semelle (9, 11) sont constituées au moins en partie d'EVA.

48. Dispositif selon l'une des revendications 23 à 45, **caractérisé en ce que** les parties de semelle (9, 11) sont constituées au moins en partie d'un matériau composite à base de fibres de carbone.

49. Dispositif selon l'une des revendications 1 à 22, **caractérisé en ce qu'**il fait partie d'une structure d'une selle de bicyclette.

50. Dispositif selon l'une des revendications 1 à 22, **caractérisé en ce qu'**il fait partie d'une structure d'une selle de cheval.

51. Dispositif selon l'une des revendications 1 à 22, **caractérisé en ce qu'**il fait partie d'une structure d'une poignée de bicyclette.

52. Dispositif selon l'une des revendications 1 à 22, **caractérisé en ce qu'**il fait partie d'une structure d'un gant.

53. Dispositif selon l'une des revendications 1 à 22, **caractérisé en ce qu'**il fait partie d'une structure d'une partie supérieure de chaussure.

54. Dispositif selon l'une des revendications précédentes, **caractérisé en ce qu'**au moins une des pièces moulées (1, 2) est reliée à un matériau calorifuge (51).

55. Dispositif selon l'une des revendications précédentes, **caractérisé en ce qu'**au moins une des pièces moulées (1, 2) fait partie intégrante d'une semelle intérieure (17).
